# EUROPEAN PATENT SPECIFICATION

(11) **EP 4 267 035 B1**
(45) Date of publication and mention of the grant of the patent: **06.05.2026**
(21) Application number: 21909672.4
(22) Date of filing: 21.12.2021
(51) Int. Cl.: A61C 7/14, A61C 7/16, A61C 7/08

(54) **INDIRECT BONDING DEVICE**
VORRICHTUNG ZUM INDIREKTEN KLEBEN
DISPOSITIF DE LIAISON INDIRECTE

(30) Priority: 23.12.2020 US 202063130119 P
(43) Date of publication of application: 01.11.2023
(73) Proprietor: Solventum Intellectual Properties Company, Maplewood, MN 55144 (US)
(72) Inventor: PAEHL, Ralf M., 49152 Bad Essen (DE); RABY, Richard E., Saint Paul, Minnesota 55133-3427 (US); BLEES, Dietmar, 49152 Bad Essen (DE); CINADER, David K., Jr., Saint Paul, Minnesota 55133-3427 (US)
(74) Representative: Vossius & Partner Patentanwälte Rechtsanwälte mbB
(86) International application number: PCT/IB2021/062092
(87) International publication number: WO 2022/137109

(56) References cited:
- DE-A1- 102016 011 720
- US-A- 4 501 554
- US-A- 4 501 554
- US-B2- 7 452 205

## Description

### Technical Field

The present disclosure relates generally to a bonding device and a method, and in particular, to an indirect bonding device and a method for a plurality of teeth. The method may be used for bonding orthodontic appliances to the plurality of teeth using the indirect bonding device.

### Background

Orthodontic appliances, such as orthodontic brackets, may be used in orthodontic treatments by dental practitioners for moving one or more teeth of a patient from a malposition to a desired position in the patient's dentition. The orthodontic treatments may improve the patient's facial appearance. In some cases, the orthodontic treatments may also improve function of the teeth by providing improved occlusion during mastication.

Orthodontic treatment involves movement of malpositioned teeth to desired locations in the oral cavity. Orthodontic treatment can improve the patient's facial appearance, especially in instances where the teeth are noticeably crooked or where the upper and lower teeth are out of alignment with each other. Orthodontic treatment can also enhance the function of the teeth by providing better occlusion during mastication.

One common type of orthodontic treatment involves the use of tiny, slotted appliances known as brackets. The brackets are fixed to the patient's teeth and an archwire is placed in the slot of each bracket. The archwire forms a track to guide movement of teeth to desired locations.

The ends of orthodontic archwires are often connected to small appliances known as buccal tubes that are, in turn, secured to the patient's molar teeth. In many instances, a set of brackets, buccal tubes and an archwire is provided for each of the patient's upper and lower dental arches. The brackets, buccal tubes and archwires are commonly referred to collectively as "braces".

In many types of orthodontic techniques, the precise position of the appliances on the teeth is an important factor for helping to ensure that the teeth move to their intended final positions. For example, one common type of orthodontic treatment technique is known as the "straight-wire" technique, where the archwire lies in a horizontal plane at the conclusion of treatment. Consequently, the brackets must be correctly positioned at the beginning of treatment so that the teeth are properly aligned once the archwire straightens and lies in the horizontal plane. If, for example, a bracket is attached to the tooth at a location that is too close to the occlusal or outer tip of the tooth, the orthodontist using a straight-wire technique will likely find that the tooth in its final position is unduly intruded. On the other hand, if the bracket is attached to the tooth at a location closer to the gingiva than is appropriate, it is likely that the final position of the tooth will be more extruded than desired.

One technique for bonding orthodontic appliances to teeth is known as an indirect bonding technique. In the past, known indirect bonding techniques have often used a placement device or transfer apparatus having a shape that matches a configuration of at least part of the patient's dental arch. One type of transfer apparatus is often called a "transfer tray" or "indirect bonding tray" and typically has a cavity for simultaneously receiving a number of teeth. A set of appliances such as brackets are releasably connected to the tray at certain, predetermined locations.

During the use of a bonding tray for indirect bonding, an adhesive is typically applied to the base of each appliance by the orthodontist or a staff member. The tray is then placed over the patient's teeth and remains in place until such time as the adhesive hardens. Next, the tray is detached from the teeth as well as from the appliances, with the result that all of the appliances previously connected to the tray are now bonded to respective teeth at their intended, predetermined locations.

Conventional orthodontic adhesives are typically highly filled, which results in an adhesive with a white or tooth color. It is desirable that a sufficient but not an excess amount of adhesive is used to bond the bracket to the tooth structure. Excess adhesive on the tooth structure can eventually be a site for bacteria accumulation and/or staining from food or drink. Because orthodontic treatment can last from 18 to 36 months or more, bacteria accumulation can damage the tooth structure and may lead to discoloration of the adhesive, both of which are undesirable. Identifying and removing excess adhesive from tooth structure can be difficult if there is similarity in the adhesive color and the tooth color, i.e., due to a lack of a contrasting color in the adhesive.

DE 10 216 011720 A1 discloses an indirect bonding device comprising: a tray configured to be detachably coupled to a tooth having a tooth surface, the first tray comprising: an inner surface at least partially conforming to the tooth surface; an outer surface opposite to the first inner surface; and a cavity at least partially extending from the first inner surface to the first outer surface along a longitudinal axis; an orthodontic appliance at least partially and detachably received within the cavity, the orthodontic appliance comprising: a base surface; and an adhesive layer disposed on the base surface, wherein the adhesive layer is configured to bond the orthodontic appliance to the tooth; and upon detachable coupling of the tray to the tooth the adhesive layer is spaced apart from the tooth surface; wherein the orthodontic appliance can be manually moved towards the tooth by the operator towards the tooth surface, such that the adhesive layer contacts the tooth surface.

### Summary

The invention relates to an indirect bonding device and is defined by the appended claims. In one aspect, the present disclosure provides an indirect bonding device. The indirect bonding device includes a first tray. The first tray is configured to be detachably coupled to a tooth having a tooth surface. The first tray includes a first inner surface at least partially conforming to the tooth surface. The first tray further includes a first outer surface opposite to the first inner surface. The first tray further includes a cavity at least partially extending from the first inner surface to the first outer surface along a longitudinal axis. The indirect bonding device further includes an orthodontic appliance at least partially and detachably received within the cavity. The orthodontic appliance includes a base surface, and an adhesive layer disposed on the base surface. The adhesive layer is configured to bond the orthodontic appliance to the tooth. The indirect bonding device further includes a second tray configured to be detachably coupled to the first tray. Upon detachable coupling of the first tray to the tooth with the second tray detached from the first tray, the adhesive layer is spaced apart from the tooth surface. Furthermore, upon detachable coupling of the second tray to the first tray, the second tray engages the first tray to move the orthodontic appliance towards the tooth surface, such that the adhesive layer contacts the tooth surface.

In another aspect, the present disclosure provides an indirect bonding device. The indirect bonding device includes a first tray. The first tray includes a first inner surface and a first outer surface opposite to the first inner surface. The first tray further includes a cavity at least partially extending from the first inner surface to the first outer surface along a longitudinal axis. The indirect bonding device further includes an orthodontic appliance at least partially and detachably received within the cavity. The orthodontic appliance includes a base surface. The indirect bonding device further includes a second tray configured to be detachably coupled to the first tray. The second tray includes a second inner surface and a second outer surface opposite to the second inner surface. Upon receipt of the orthodontic appliance within the cavity of the first tray with the second tray detached from the first tray, the base surface of the orthodontic appliance is disposed within the cavity and spaced apart from the first inner surface by a first gap along the longitudinal axis. Furthermore, upon detachable coupling of the second tray to the first tray, the second inner surface of the second tray engages the first tray to move the orthodontic appliance towards the first inner surface, such that the base surface of the orthodontic appliance is spaced apart from the first inner surface by a second gap along the longitudinal axis. The second gap is less than the first gap.

In another aspect, the present disclosure provides a method for a plurality of teeth. Each tooth from the plurality of teeth has a tooth surface. The method includes providing a first tray including a plurality of cavities and a plurality of orthodontic appliances. Each orthodontic appliance from the plurality of orthodontic appliances is at least partially and detachably received within a corresponding cavity from the plurality of cavities. Further, an adhesive layer is provided on a base surface of each orthodontic appliance. The method further includes detachably coupling the first tray to the plurality of teeth, such that the adhesive layer provided on the base surface of a corresponding orthodontic appliance from the plurality of orthodontic appliances is spaced apart from the tooth surface of a corresponding tooth from the plurality of teeth. The method further includes detachably coupling a second tray to the first tray to move each orthodontic appliance towards the tooth surface of the corresponding tooth, such that the adhesive layer provided on the base surface of the corresponding orthodontic appliance contacts the tooth surface of the corresponding tooth.

### Brief Description of the Drawings

Exemplary embodiments disclosed herein may be more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labeled with the same number.
FIG. 1A is a schematic side elevation view of an indirect bonding device and a dental arch of a patient according to an embodiment of the present invention;
FIG. 1B is a schematic sectional side view of the indirect bonding device and a tooth of the patient according to an embodiment of the present invention;
FIGS. 2A and 2B are schematic sectional side views of the indirect bonding device and the tooth according to an embodiment of the present invention;
FIG. 2C is an enlarged schematic sectional side view of the indirect bonding device according to an embodiment of the present invention;
FIGS. 3A and 3B are schematic sectional side views of an indirect bonding device and the tooth according to another embodiment of the present invention;
FIGS. 4A and 4B are schematic sectional side views of an indirect bonding device and the tooth according to another embodiment of the present invention; and
FIGS. 5A and 5B are schematic sectional side views of an indirect bonding device and the tooth according to another embodiment of the present disclosure, which does not form part of the invention;
FIG. 6 is a flowchart illustrating a method for a plurality of teeth;
FIGS. 7A and 7B are schematic sectional side views of an indirect bonding device and the tooth according to another embodiment of the present invention; and
FIGS. 8A and 8B are perspective views of the indirect bonding device of FIGS. 7A & 7B.

### Definitions

"Mesial" means in a direction toward the center of the patient's curved dental arch.

"Distal" means in a direction away from the center of the patient's curved dental arch.

"Occlusal" means in a direction toward the outer tips of the patient's teeth.

"Gingival" means in a direction toward the patient's gums or gingiva.

"Lingual" means in a direction toward the patient's tongue.

"Labial" means in a direction towards the patient's lips.

"Buccal" means in a direction toward the patient's cheeks.

As used herein as a modifier to a property or attribute, the term "generally", unless otherwise specifically defined, means that the property or attribute would be readily recognizable by a person of ordinary skill but without requiring absolute precision or a perfect match (e.g., within +/- 20 % for quantifiable properties). The term "substantially", unless otherwise specifically defined, means to a high degree of approximation (e.g., within +/- 10% for quantifiable properties) but again without requiring absolute precision or a perfect match. Terms such as same, equal, uniform, constant, strictly, and the like, are understood to be within the usual tolerances or measuring error applicable to the particular circumstance rather than requiring absolute precision or a perfect match.

### Detailed Description

In the following description, reference is made to the accompanying figures that form a part thereof and in which various embodiments are shown by way of illustration. It is to be understood that other embodiments are contemplated and may be made without departing from the scope of the present disclosure. The following detailed description, therefore, is not to be taken in a limiting sense.

The present disclosure relates to an indirect bonding device. The indirect bonding device may be used to apply an orthodontic appliance to a tooth of a patient. Furthermore, the indirect bonding device may be used to apply a plurality of orthodontic appliances to a plurality of teeth of the patient.

The indirect bonding device includes a first tray. The first tray is configured to be detachably coupled to a tooth having a tooth surface. The first tray includes a first inner surface at least partially conforming to the tooth surface. The first tray further includes a first outer surface opposite to the first inner surface. The first tray further includes a cavity at least partially extending from the first inner surface to the first outer surface along a longitudinal axis. The indirect bonding device further includes an orthodontic appliance at least partially and detachably received within the cavity. The orthodontic appliance includes a base surface and an adhesive layer disposed on the base surface. The adhesive layer is configured to bond the orthodontic appliance to the tooth. The indirect bonding device further includes a second tray configured to be detachably coupled to the first tray.

Upon detachable coupling of the first tray to the tooth with the second tray detached from the first tray, the adhesive layer is spaced apart from the tooth surface. Furthermore, upon detachable coupling of the second tray to the first tray, the second tray engages the first tray to move the orthodontic appliance towards the tooth surface, such that the adhesive layer contacts the tooth surface.

Conventional bonding techniques may utilize a "transfer tray" to apply orthodontic appliances to teeth of a patient. However, when conventional transfer trays are attached to the teeth, the orthodontic appliances along with an adhesive that bonds the orthodontic appliances to the teeth approach the teeth in an occluso-gingival direction (i.e., substantially parallel to lingual and labial surfaces of the teeth). This generally results in smearing of the adhesive along the lingual and labial surfaces of the teeth. The smearing of the adhesive may reduce a volume of the adhesive that bonds the orthodontic appliances to the teeth, thereby resulting in a poor bonding of the orthodontic appliances to the teeth. In some cases, the orthodontic appliances with the poor bonding may need to be re-bonded by dental practitioners, and therefore increase a chair-time of the patient.

In some cases, the dental practitioners may use more adhesive than required to reduce chances of the poor bonding of the orthodontic appliances to the teeth. However, this may result in an excess adhesive applied on the lingual and labial of the teeth. The excess adhesive may cause uneven staining, mineralization, and/or demineralization of the teeth. In some cases, the excess adhesive may cause plaque build-up leading to acid erosion of the teeth. Therefore, removing the excess adhesive further increases the chair-time of the patient.

The indirect bonding device of the present disclosure may reduce or prevent undesired smearing of the adhesive layer on the tooth of the patient. Specifically, the adhesive layer disposed on the base surface of the orthodontic appliance may not smear on the tooth surface upon detachable coupling of the first tray to the tooth as the adhesive layer is spaced apart from the tooth surface. Thus, the indirect bonding device may prevent the adhesive layer from being wiped on the tooth surface. Therefore, the indirect bonding device may eliminate a need for dental practitioners to estimate and optimize a volume and a thickness of the adhesive layer for a reliable bonding of the orthodontic appliance to the tooth. Additionally, the indirect bonding device may eliminate a need for removing excess adhesive (in a case where the dental practitioners use more adhesive than required). This may reduce a chair-time of the patient.

Furthermore, upon detachable coupling of the second tray to the first tray, the orthodontic appliance along with the adhesive layer may move and approach the tooth substantially normal to its tooth surface (for example, a lingual tooth surface and/or a labial tooth surface). Therefore, the indirect bonding device may uniformly spread the adhesive layer on the tooth surface. Consequently, the indirect bonding device may improve a bond between the orthodontic appliance and the tooth. As a result, the indirect bonding device may provide robust and reliable bonding of the orthodontic appliances and further reduce the chair-time of the patient.

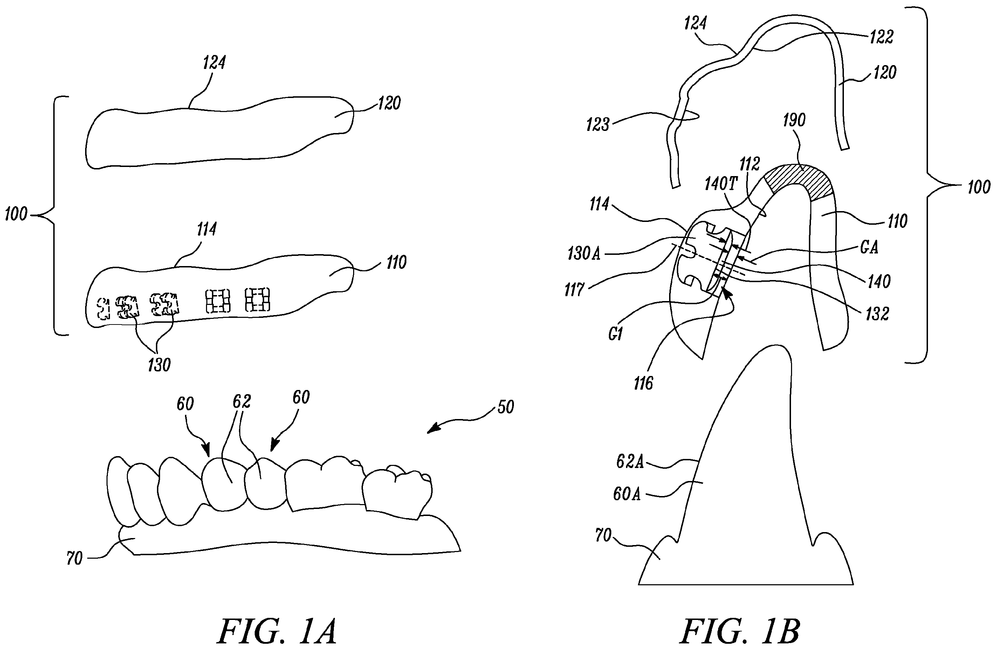

Referring now to the Figures, FIG. 1A illustrates a dental arch 50 of a patient. The dental arch 50 includes a plurality of teeth 60. Each tooth 60 from the plurality of teeth 60 has a tooth surface 62. The tooth surface 62 may correspond to an external surface of the corresponding tooth 60. The tooth surface 62 may include a labial tooth surface, a buccal tooth surface, a lingual tooth surface and an occlusal tooth surface. Furthermore, the tooth surface 62 of each tooth 60 may include an application surface and a non-application surface. The application surface may refer to a surface where an orthodontic appliance is to be applied. The non-application surface may refer to a surface other than the application surface, i.e., a surface where the orthodontic appliance is not to be applied. The application surface may be on the labial tooth surface or the lingual tooth surface of each tooth 60. As shown in FIG. 1A, each tooth 60 is partially surrounded by gingival tissues 70 of the patient.

One or more teeth 60 from the plurality of teeth 60 of the patient may be malpositioned. Therefore, the patient may be required to undergo an orthodontic treatment to correct malpositioning of the one or more teeth 60. Correcting the malpositioning of the one or more teeth 60 may improve facial appearance of the patient. Furthermore, correcting the malpositioning of the one or more teeth 60 may enhance function of the one or more teeth 60 by providing improved occlusion during mastication.

FIG. 1A further illustrates an indirect bonding device 100 according to an embodiment of the present invention. The indirect bonding device 100 may be used by dental practitioners toaid in the orthodontic treatment of the one or more teeth 60. The indirect bonding device 100 may be used to precisely and accurately apply orthodontic appliances to the plurality of teeth 60. Specifically, the indirect bonding device 100 may be used to precisely and accurately apply orthodontic appliances to the application surfaces of the plurality of teeth 60.

The indirect bonding device 100 includes a first tray 110 and a second tray 120. The first tray 110 is configured to be detachably coupled to the plurality of teeth 60. Furthermore, the second tray 120 is configured to be detachably coupled to the first tray 110.

The indirect bonding device 100 further includes a plurality of orthodontic appliances 130 (shown by dashed lines). Each orthodontic appliance 130 from the plurality of orthodontic appliances 130 is at least partially and detachably included in the first tray 110. Each orthodontic appliance 130 corresponds to a tooth 60 from the plurality of teeth 60. Specifically, the indirect bonding device 100 includes a corresponding orthodontic appliance 130 from the plurality of orthodontic appliances 130 for a corresponding tooth 60 from the plurality of teeth 60.

Upon detachable coupling of the first tray 110 to the plurality of teeth 60 with the second tray 120 detached from the first tray 110, each orthodontic appliance 130 is spaced apart from the tooth surface 62 of the corresponding tooth 60. Furthermore, upon detachable coupling of the second tray 120 to the first tray 110, the second tray 120 engages the first tray 110 to move each orthodontic appliance 130 towards the tooth surface 62 of the corresponding tooth 60.

It may be noted that the dental arch 50 shown in FIG. 1A is a lower dental arch of the patient. Therefore, the indirect bonding device 100 shown in FIG. 1A is configured according to the lower dental arch. In some other embodiments, the dental arch 50 may include an upper dental arch of the patient, and the indirect bonding device 100 may be configured according to the upper dental arch. Furthermore, it may be noted that the indirect bonding device 100 shown in FIGS. 1A and 1B is configured to bond the corresponding orthodontic appliance 130 to the corresponding tooth 60 on the labial tooth surface of the corresponding tooth 60. Specifically, the application surface of each tooth 60 is the labial tooth surface. In some other embodiments, the indirect bonding device 100 may be configured to bond the corresponding orthodontic appliance 130 to the corresponding tooth 60 on a lingual tooth surface of the corresponding tooth 60. Specifically, the application surface of each tooth 60 may be the lingual tooth surface. Moreover, it may be noted that each orthodontic appliance 130 shown in FIG. 1A is an orthodontic bracket. In some other embodiments, the plurality of orthodontic appliances 130 may include any appliance that may be configured to be bonded to the plurality of teeth 60.

In the illustrated embodiment of FIG. 1A, the first tray 110 is a full tray. Specifically, the first tray 110 includes the plurality of orthodontic appliances 130 corresponding to the plurality of teeth 60. However, in some other embodiments, the first tray 110 may be a partial tray, i.e., the first tray 110 may include at least one orthodontic appliance 130 corresponding to at least one tooth 60. In some cases (for example, overcrowding of teeth), partial trays may be used by dental practitioners to have more control over bonding of the orthodontic appliances to the teeth. In these cases, the first tray 110 may be split into halves or thirds of the full tray. In some other cases, the partial trays may be used to re-apply specific orthodontic appliances that have accidentally de-bonded. Specifically, the partial trays may be used to re-apply specific orthodontic appliances in an event of orthodontic appliance failure (such as fracture). Accordingly, the second tray 120 may be also be a partial tray corresponding to the first tray 110. However, configurations of the first tray 110 and the second tray 120 may be modified as per desired application attributes.

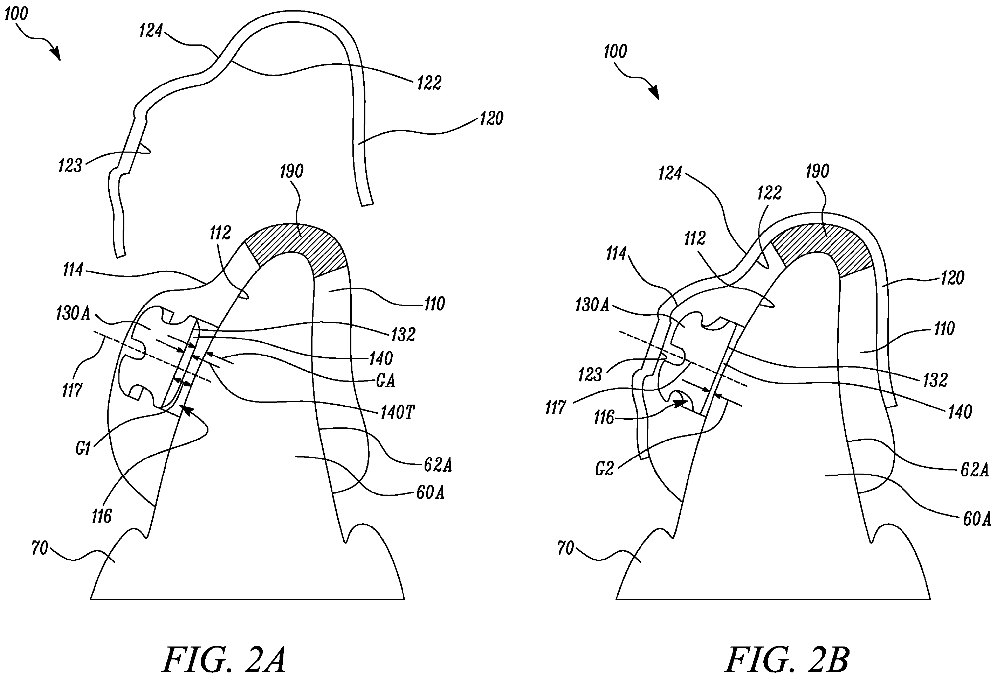

The indirect bonding device 100 may be used to apply the plurality of orthodontic appliances 130 to the plurality of teeth 60. Specifically, the indirect bonding device 100 may be used to apply the corresponding orthodontic appliance 130 to the corresponding tooth 60. Advantageously, the indirect bonding device 100 may simultaneously apply the plurality of orthodontic appliances 130 to the plurality of teeth 60 upon detachable coupling of the second tray 120 to the first tray 110. In some embodiments, the indirect bonding device 100 may be used to apply the at least one orthodontic appliance 130 corresponding to the at least one tooth 60. The indirect bonding device 100 will be explained in detail with reference to FIGS. 1B, 2A and 2B.

FIG. 1B illustrates a sectional side view of the indirect bonding device 100 according to an embodiment of the present invention. FIG. 1B further illustrates a sectional side view of a tooth 60A from the plurality of teeth 60 (shown in FIG. 1A). The tooth 60A has a tooth surface 62A. As discussed above, the tooth surface 62A corresponds to an external surface of the tooth 60A. The tooth surface 62A includes the labial tooth surface, the buccal tooth surface, the lingual tooth surface, and the occlusal tooth surface. Furthermore, the tooth surface 62A includes the application surface and the non-application surface. The application surface may be the labial tooth surface of the tooth 60A or the lingual tooth surface of the tooth 60A. In the illustrated embodiment of FIG. 1B, the application surface is the labial tooth surface of the tooth 60A and the non-application surface includes the lingual surface of the tooth 60A.

The tooth 60A may include a central incisor, a lateral incisor, a canine, a premolar, a first molar, a second molar, or a third molar. Furthermore, the tooth 60A may be of the lower dental arch or the upper dental arch of the patient. As shown in FIG. 1B, the tooth 60A is partially surrounded by the gingival tissues 70 of the patient.

Hereinafter, while reference is made to the tooth 60A, it should be understood that the indirect bonding device 100 may include a plurality of the described features corresponding to each tooth 60 from the plurality of teeth 60 (shown in FIG. 1A). Referring to FIG. 1B, the first tray 110 is configured to be detachably coupled to the tooth 60A having the tooth surface 62A. The first tray 110 includes a first inner surface 112 and a first outer surface 114 opposite to the first inner surface 112. The first inner surface 112 at least partially conforms to the tooth surface 62A.

The second tray 120 is configured to be detachably coupled to the first tray 110. The second tray 120 includes a second inner surface 122, and a second outer surface 124 opposite to the second inner surface 122. In the illustrated embodiment of FIG. 1B, the second tray 120 further includes a projection 123 disposed on the second inner surface 122 thereof. In some embodiments, the projection 123 extends towards the first outer surface 114 of the first tray 110.

In some embodiments, the second tray 120 detachably couples to the first tray 110 via an interference fit. In other words, the second inner surface 122 of the second tray 120 may have slightly smaller geometric dimensions than the first outer surface 114 of the first tray 110. As a result, the second tray 120 may at least partially deform the first tray 110 upon detachable coupling of the second tray 120 to the first tray 110.
according to the invention, the first tray 110 includes a first material having a first elastic modulus. According to the invention, the second tray 120 includes a second material having a second elastic modulus. According to the invention, the second elastic modulus is greater than the first elastic modulus, such that the second tray 120 is configured to at least partially deform the first tray 110 upon engagement with the first tray 110. In other words, in some embodiments, the first tray 110 is softer or more pliable than the second tray 120. In some embodiments, the first elastic modulus is from about 0.5 megapascals (MPa) to about 100 MPa. In some embodiments, the second elastic modulus is from about 1000 MPa to about 2500 MPa. In some other embodiments, the first elastic modulus may be from about 20 MPa to about 500 MPa and the second elastic modulus may be from about 2000 MPa to about 3000 MPa.

The first tray 110 and the second tray 120 may be made by any suitable material using any suitable manufacturing process. For example, each of the first tray 110 and the second tray 120 may be made from materials, such as silicone, polyethylene terephthalate (PET), polyethylene terephthalate glycol (PET-G), polystyrene, and the like. Furthermore, each of the first tray 110 and the second tray 120 may be manufactured by additive manufacturing, thermoforming, or a combination thereof. The dental practitioners may scan the plurality of teeth 60 (shown in FIG. 1) to generate a virtual model of the plurality of teeth 60. In some cases, the dental practitioners may send the virtual model of the plurality of teeth 60 to a manufacturing facility for manufacturing the first tray 110 and the second tray 120 according to the virtual model. In some other cases, the dental practitioners may themselves manufacture the first tray 110 and the second tray 120 based on the virtual model.

As shown in FIG. 1B, the first tray 110 further includes a cavity 116. The cavity 116 at least partially extends from the first inner surface 112 to the first outer surface 114 along a longitudinal axis 117. The first tray 110 further includes an orthodontic appliance 130A. The orthodontic appliance 130A may be from the plurality of orthodontic appliances 130 (shown in FIG. 1A). The orthodontic appliance 130A is at least partially and detachably received within the cavity 116. The cavity 116 may be included in the first tray 110 corresponding to the application surface of the tooth 60A. Furthermore, a size of the cavity 116 may be configured according to a size of the orthodontic appliance 130A. In some cases, the orthodontic appliance 130A may be interchangeably referred to as the orthodontic appliance 130.

In some embodiments, the first tray 110 further includes a plurality of the cavities 116 corresponding to the plurality of teeth 60 (shown in FIG. 1A). In some embodiments, the indirect bonding device 100 includes a plurality of the orthodontic appliances 130A corresponding to the plurality of teeth 60 (shown in FIG. 1A). Each orthodontic appliance 130A is at least partially and detachably received within a corresponding cavity 116 from the plurality of the cavities 116. The plurality of the cavities 116 may correspond to the application surfaces of the plurality of teeth 60 (shown in FIG. 1A).

The orthodontic appliance 130A shown in FIG. 1B is an orthodontic bracket. In some other embodiments, the orthodontic appliance 130A may include any orthodontic appliance that is to be bonded to the tooth 60A. Specifically, the orthodontic appliance 130A may include, but is not limited to, an orthodontic buccal tube, an orthodontic sheath, an orthodontic bite opener, a bite ramp, an aligner attachment, an orthodontic button, an orthodontic cleat, and the like. In some embodiments, different orthodontic appliances from the plurality of the orthodontic appliances 130A may be applied to different teeth from the plurality of teeth 60 (shown in FIG. 1A). For example, the orthodontic brackets may be applied to incisors, canines etc., while the orthodontic buccal tubes may be applied to molars of the patient.

The orthodontic appliance 130A includes a base surface 132. The base surface 132 may have a suitable shape for bonding with the tooth surface 62A. Specifically, the base surface 132 may have a suitable shape for bonding with the application surface of the tooth 60A. In some embodiments, the base surface 132 may have a contour matching a contour of the application surface of the tooth 60A. In some embodiments, the orthodontic appliance 130A may further include meshes, protrusions, patterns, and the like (not shown) disposed on the base surface 132 to improve bonding of the orthodontic appliance 130A to the tooth 60A.

The orthodontic appliance 130A further includes an adhesive layer 140 disposed on the base surface 132. The adhesive layer 140 is configured to bond the orthodontic appliance 130A to the tooth 60A. The adhesive layer 140 defines a thickness 140T. The thickness 140T of the adhesive layer 140 may be defined as a maximum thickness of the adhesive layer 140.

The adhesive layer 140 may include single or multi-layer adhesives. Specifically, the adhesive layer 140 may include one or more adhesive layers. Each layer of the one or more adhesive layers may include a different adhesive. The one or more adhesive layers may include different compositions of adhesives. The compositions may include, for example, both light cure and chemical cure orthodontic adhesives. In some embodiments, the compositions may be fluoride releasing adhesives, self-etching adhesives, self-priming adhesives, color-changing adhesives, and combinations thereof.

Suitable adhesives may include composites, compomers, glass ionomers and resin-modified glass ionomers. Examples of light-curable adhesives may include Transbond brand XT primer, Transbond brand MIP primer, Transbond Supreme LV, and Transbond LR brand adhesive from 3M Unitek and Adper brand Single Bond, Adper brand Single Bond Plus and Adper brand Scotchbond brand adhesives from 3M ESPE. Examples of chemical curing adhesives may include Sondhi brand adhesive, Concise brand adhesive and Multi-Cure brand glass ionomer cement from 3M Unitek.

It may be noted that the adhesive layer 140 may include one or more of the above described examples of adhesives and any other suitable adhesives, as per desired application attributes.

In some embodiments, the first tray 110 may further include a ring-shaped recess (not shown) adjacent to the orthodontic appliance 130A. Specifically, the cavity 116 may include the ring-shaped recess. In some embodiments, excess adhesive(s) of the adhesive layer 140 may flow into the ring-shaped recess during bonding and may not get smeared on the non-application surface of the tooth 60A. Therefore, the ring-shaped recess may create a smooth transition of the adhesive layer 140 from base surface 132 of the orthodontic appliance 130A to the tooth 60A. Thus, the ring-shaped recess may further reduce smearing of the adhesive layer 140 on the non-application surface of the tooth 60A. Furthermore, the adhesive layer 140 may uniformly apply on the application surface of the tooth 60A.

As shown in FIG. 1B, in some embodiments, upon receipt of the orthodontic appliance 130A within the cavity 116 of the first tray 110 with the second tray 120 detached from the first tray 110, the base surface 132 of the orthodontic appliance 130A and the first inner surface 112 of the first tray 110 define a first gap G1 therebetween along the longitudinal axis 117. In other words, the base surface 132 of the orthodontic appliance 130A is disposed within the cavity 116 and spaced apart from the first inner surface 112 by the first gap G1 along the longitudinal axis 117. In some embodiments, the first gap G1 may be defined as a minimum gap between the base surface 132 of the orthodontic appliance 130A and the first inner surface 112 of the first tray 110.

Furthermore, as shown in FIG. 1B, in some embodiments, the first tray 110 further includes one or more occlusal stop members 190. The occlusal stop members 190 may engage the occlusal tooth surface of the plurality of teeth 60 (shown in FIG. 1A) upon detachable coupling of the first tray 110 to the plurality of teeth 60. In the illustrated embodiment of FIG. 1B, the occlusal stop members 190 extend from the first inner surface 112 to the first outer surface 114 of the first tray 110. However, in some other embodiments, the occlusal stop members 190 may partially extend from the first inner surface 112 to the first outer surface 114 of the first tray 110. Furthermore, it should be understood that the occlusal stop members 190 may have any shape as per desired application attributes.

In some embodiments, the occlusal stop members 190 may be rigid. Specifically, the occlusal stop members 190 may not deform upon detachable coupling of the first tray 110 to the tooth 60A, and upon detachable coupling of the second tray 120 to the first tray 110. Therefore, the occlusal stop members 190 may improve positioning of the first tray 110 on the tooth 60A, as the first tray 110 may be deformable. Furthermore, the occlusal stop members 190 may improve positioning of the cavity 116 corresponding to the application surface of tooth 60A. Consequently, the occlusal stop members 190 may improve precision and accuracy in positioning of the orthodontic appliance 130A on the tooth 60A.

FIG. 2A illustrates the first tray 110 detachably coupled to the tooth 60A and the second tray 120 detached from the first tray 110. Referring to FIG. 2A, upon detachable coupling of the first tray 110 to the tooth 60A with the second tray 120 detached from the first tray 110, the adhesive layer 140 is spaced apart from the tooth surface 62A.

In some embodiments, the first gap G1 may remain unchanged upon detachable coupling of the first tray 110 to the tooth 60A with the second tray 120 detached from the first tray 110. In the illustrated embodiment of FIG. 2A, the first gap G1 remains unchanged upon detachable coupling of the first tray 110 to the tooth 60A. In some embodiments, the adhesive layer 140 disposed on the base surface 132 partially fills the first gap G1 prior to detachable coupling of the second tray 120 to the first tray 110, such that the adhesive layer 140 is spaced apart from the tooth surface 62A. In other words, the first gap G1 is greater than the thickness 140T of the adhesive layer 140.

In the illustrated embodiment of FIGS. 1B and 2A, a minimum gap GA is provided between the adhesive layer 140 and the first inner surface 112 of the first tray 110 upon receiving the orthodontic appliance 130A within the cavity 116 with the second tray 120 detached from the first tray 110. The minimum gap GA remains unchanged upon detachable coupling of the first tray 110 to the tooth 60A with the second tray 120 detached from the first tray 110. In some cases, the minimum gap GA may be less than or equal to a difference between the first gap G1 and the thickness 140T of the adhesive layer 140 (GA ≤ (G1 - 140T)). Further, the minimum gap GA may always be greater than zero, such that the adhesive layer 140 is spaced apart from the first inner surface 112 of the first tray 110 as well as the tooth surface 62A of the tooth 60A. However, in some embodiments, the minimum gap GA may be substantially zero. The minimum gap GA may ensure that the adhesive layer 140 does not contact the tooth surface 62A upon detachable coupling of the first tray 110 to the tooth 60A with the second tray 120 detached from the first tray 110.

The occlusal stop members 190 engage the occlusal tooth surface of the tooth 60A upon detachable coupling of the first tray 110 to the tooth 60A. As discussed above, the occlusal stop members 190 may improve positioning of the first tray 110 on the tooth 60A. The occlusal stop members 190 may also improve positioning of the cavity 116, such that the cavity 116 corresponds to the application surface of the tooth 60A. As shown in FIGS. 2A and 2B, the first tray 110 may be configured to not contact the gingival tissues 70 upon detachable coupling to the tooth 60A. Therefore, the indirect bonding device 100 may improve comfort of the patient during the orthodontic treatment.

FIG. 2B illustrates the first tray 110 detachably coupled to the tooth 60A with the second tray 120 detachably coupled to the first tray 110. Referring to FIG. 2B, upon detachable coupling of the second tray 120 to the first tray 110, the second tray 120 engages the first tray 110 to move the orthodontic appliance 130A towards the tooth surface 62A, such that the adhesive layer 140 contacts the tooth surface 62A. Furthermore, upon detachable coupling of the second tray 120 to the first tray 110, the second inner surface 122 of the second tray 120 engages the first tray 110 to move the orthodontic appliance 130A towards the first inner surface 112, such that the base surface 132 of the orthodontic appliance 130A is spaced apart from the first inner surface 112 by a second gap G2 along the longitudinal axis 117. The second gap G2 is less than the first gap G1. In some embodiments, the second gap G2 is less than or equal to the thickness 140T (shown in FIG. 2A) of the adhesive layer 140. In some other embodiments, the second gap G2 is substantially zero.

More specifically, in the illustrated embodiment of FIGS. 2A and 2B, upon detachable coupling of the second tray 120 to the first tray 110, the projection 123 at least partially deforms the first tray 110 to move the orthodontic appliance 130A towards the tooth surface 62A along the longitudinal axis 117, such that the adhesive layer 140 contacts the tooth surface 62A. Furthermore, the projection 123 at least partially deforms the first tray 110 to move the orthodontic appliance 130A towards the first inner surface 112 of the first tray 110 along the longitudinal axis 117, such that the adhesive layer 140 is at least flush with the first inner surface 112.

The projection 123 may have any suitable shape, such that the projection 123 extends to a greater degree towards the first outer surface 114 of the first tray 110 than the rest of the second inner surface 122 of the second tray 120. In some cases, the projection 123 may have a substantially planar portion that interfaces or engages with the first outer surface 114 of the first tray 110. Further, a raised portion of the projection 123 may be disposed between the planar portion and the second inner surface 122 of the second tray 120. The raised portion may at least extend along the longitudinal axis 117. Further, the raised portion may be curved or straight.

The indirect bonding device 100 may reduce smearing of the adhesive layer 140 on the tooth 60A of the patient. Specifically, the adhesive layer 140 may be disposed on the base surface 132 of the orthodontic appliance 130A, such that the adhesive layer 140 may not smear on the tooth surface 62A upon detachable coupling of the first tray 110 to the tooth 60A. Thus, the indirect bonding device 100 may prevent the adhesive layer 140 from being wiped on the tooth surface 62A. Therefore, the indirect bonding device 100 may eliminate a need for dental practitioners to estimate and optimize the thickness 140T of the adhesive layer 140 for a reliable bonding of the orthodontic appliance 130A to the tooth 60A. Additionally, the indirect bonding device 100 may eliminate a need for removing excess adhesive (in a case where the dental practitioners use more adhesive than required). This may reduce a chair-time of the patient.

Detachable coupling of the second tray 120 to the first tray 110 may advantageously reduce localized deformation of the first tray 110. That is, the second tray 120 may deform the first tray 110 in a uniform manner. This may provide greater precision and accuracy in positioning of the orthodontic appliance 130A on the tooth 60A. Specifically, the orthodontic appliance 130A may be precisely and accurately applied on the application surface of the tooth 60A. As a result, the indirect bonding device 100 may improve effectiveness of the orthodontic treatment.

Furthermore, upon detachable coupling of the second tray 120 to the first tray 110, the orthodontic appliance 130A may move and approach the tooth 60A substantially normally to the application surface of the tooth 60A. Therefore, the indirect bonding device 100 may allow uniform spread or application of the adhesive layer 140 on the application surface of the tooth 60A. Consequently, the indirect bonding device 100 may allow robust and reliable bonding of the orthodontic appliance 130A to the tooth 60A.

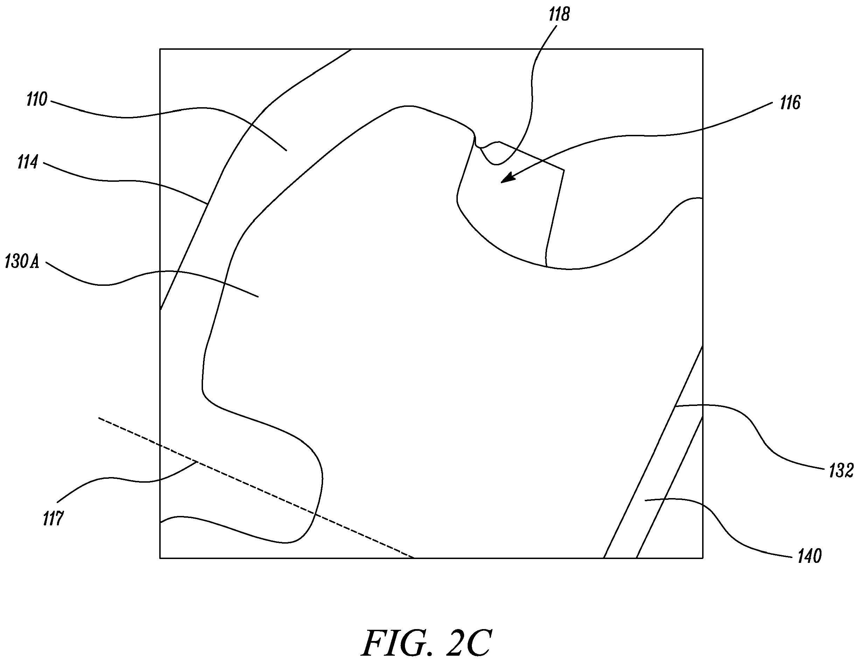

As shown in FIG. 2C, in some embodiments, the first tray 110 further includes a cavity protrusion 118 extending into the cavity 116. The cavity protrusion 118 engages the orthodontic appliance 130A, such that the orthodontic appliance 130A is retained within the cavity 116. In some embodiments, the cavity protrusion 118 may be integrally formed with the first tray 110. In some embodiments, the cavity protrusion 118 may include the first material having the first elastic modulus. The cavity protrusion 118 may have any suitable cross-sectional shape, such as curved, polygonal, semi-circular, or the like. In some embodiments, the cavity protrusion 118 may have a full or a partial annular configuration disposed around the orthodontic appliance 130A.

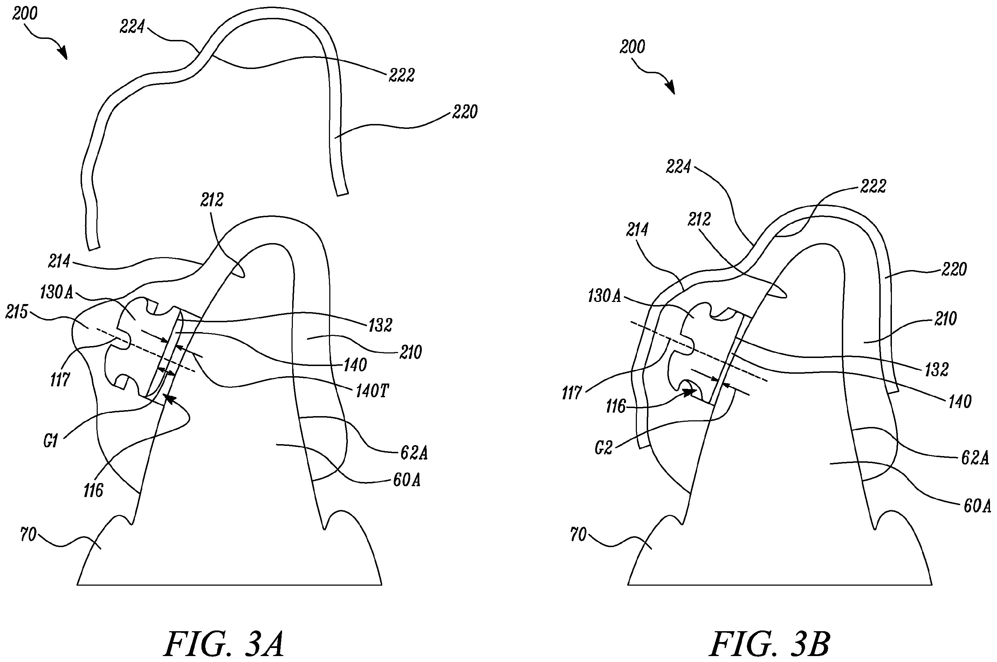

FIGS. 3A and 3B illustrate an indirect bonding device 200 according to another embodiment of the present disclosure. The indirect bonding device 200 is substantially similar to the indirect bonding device 100 illustrated in FIGS. 2A and 2B. Common components between the indirect bonding devices 100, 200 are illustrated by the same reference numerals. However, the indirect bonding device 200 includes a first tray 210 and a second tray 220 having different configurations from the first tray 110 and the second tray 120, respectively, illustrated in FIGS. 2A and 2B.

Referring to FIGS. 3A and 3B, the first tray 210 is configured to be detachably coupled to the tooth 60A having the tooth surface 62A. The first tray 210 includes a first inner surface 212, and a first outer surface 214 opposite to the first inner surface 212. The first inner surface 212 at least partially conforms to the tooth surface 62A. The first tray 210 further includes a tray protrusion 215 disposed on the first outer surface 214 and extending away from the first inner surface 212 of the first tray 210 along the longitudinal axis 117. In some embodiments, the first tray 210 may further include the occlusal stop members 190 (shown in FIG. 2A).

Furthermore, the second tray 220 is configured to be detachably coupled to the first tray 210. The second tray 220 includes a second inner surface 222, and a second outer surface 224 opposite to the second inner surface 222.

FIG. 3A illustrates the first tray 210 detachably coupled to the tooth 60A and the second tray 220 detached from the first tray 210. Referring to FIG. 3A, upon detachable coupling of the first tray 210 to the tooth 60A with the second tray 220 detached from the first tray 210, the adhesive layer 140 is spaced apart from the tooth surface 62A.

In the illustrated embodiment of FIG. 3A, the first gap G1 remains unchanged upon detachable coupling of the first tray 210 to the tooth 60A with the second tray 220 detached from the first tray 210. Furthermore, the adhesive layer 140 disposed on the base surface 132 partially fills the first gap G1 prior to detachable coupling of the second tray 220 to the first tray 210, such that the adhesive layer 140 is spaced apart from the tooth surface 62A. In other words, the first gap G1 is greater than the thickness 140T of the adhesive layer 140.

FIG. 3B illustrates the first tray 210 detachably coupled to the tooth 60A with the second tray 220 detachably coupled to the first tray 210. Referring to FIG. 3B, upon detachable coupling of the second tray 220 to the first tray 210, the second tray 220 engages the first tray 210 to move the orthodontic appliance 130A towards the tooth surface 62A, such that the adhesive layer 140 contacts the tooth surface 62A. Furthermore, upon detachable coupling of the second tray 220 to the first tray 210, the second tray 220 engages the first tray 210 to move the orthodontic appliance 130A towards the first inner surface 212, such that the base surface 132 of the orthodontic appliance 130A is spaced apart from the first inner surface 212 by the second gap G2 along the longitudinal axis 117. The second gap G2 is less than the first gap G1. In some embodiments, the second gap G2 is less than or equal to the thickness 140T (shown in FIG. 3A) of the adhesive layer 140. In some other embodiments, the second gap G2 is substantially zero. In some embodiments, the second gap G2 may be negative.

More specifically, in the illustrated embodiment of FIGS. 3A and 3B, upon detachable coupling of the second tray 220 to the first tray 210, the second inner surface 222 of the second tray 220 engages the tray protrusion 215 and at least partially deforms the tray protrusion 215 to move the orthodontic appliance 130A towards the tooth surface 62A along the longitudinal axis 117, such that the adhesive layer 140 contacts the tooth surface 62A. Furthermore, the second inner surface 222 of the second tray 220 engages the tray protrusion 215 and at least partially deforms the tray protrusion 215 to move the orthodontic appliance 130A towards the first inner surface 212 along the longitudinal axis 117, such that the adhesive layer 140 is at least flush with the first inner surface 212. In some cases, the second tray 220 may cause the tray protrusion 215 to deform in a manner, such that the tray protrusion 215 substantially conforms to the second inner surface 222 of the second tray 220. Deformation of the tray protrusion 215 causes movement of the orthodontic appliance 130A towards the first inner surface 212 of the first tray 210 and the tooth surface 62A of the tooth 60A.

The tray protrusion 215 may have any suitable shape, such that the tray protrusion extends to a greater degree towards the second inner surface 222 of the second tray 220 than the rest of the first outer surface 214 of the first tray 210. The tray protrusion 215 may have various cross-section shapes, such as curved, polygonal, semi-circular, and so forth.

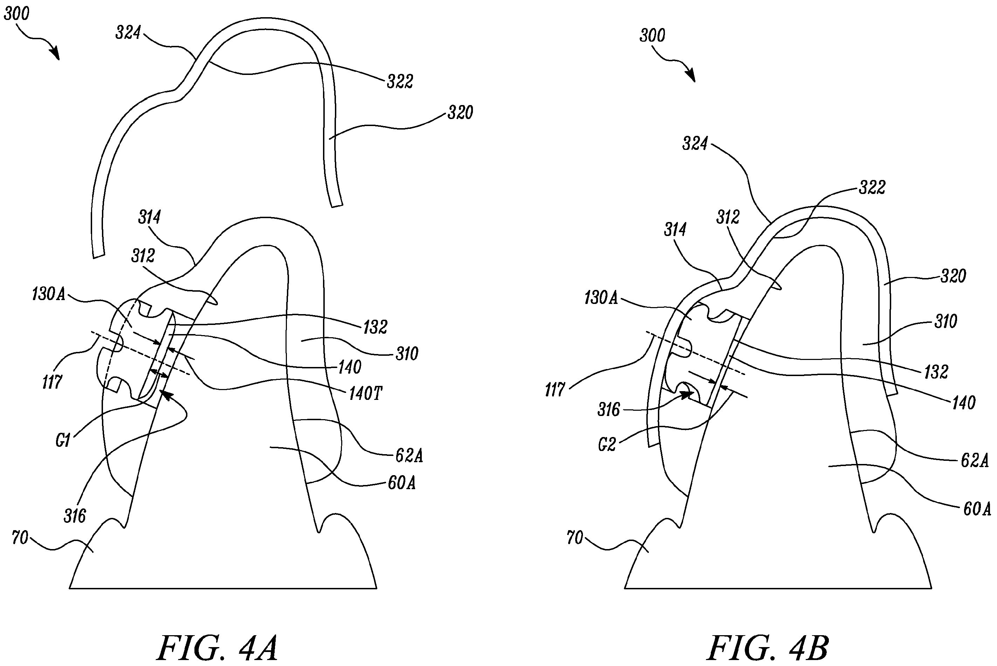

FIGS. 4A and 4B illustrate an indirect bonding device 300 according to another embodiment of the present disclosure. The indirect bonding device 300 is substantially similar to the indirect bonding device 100 illustrated in FIGS. 2A and 2B. Common components between the indirect bonding devices 100, 300 are illustrated by the same reference numerals. However, the indirect bonding device 300 includes a first tray 310 and a second tray 320 having different configurations from the first tray 110 and the second tray 120, respectively, illustrated in FIGS. 2A and 2B. Furthermore, the first tray 310 includes a cavity 316 having a different configuration from the cavity 116 illustrated in FIGS. 2A and 2B.

Referring to FIGS. 4A and 4B, the first tray 310 is configured to be detachably coupled to the tooth 60A having the tooth surface 62A. The first tray 310 includes a first inner surface 312 and a first outer surface 314 opposite to the first inner surface 312. The first inner surface 312 at least partially conforms to the tooth surface 62A. In some embodiments, the first tray 310 may further include the occlusal stop members 190 (shown in FIG. 2A).

Furthermore, the second tray 320 is configured to be detachably coupled to the first tray 310. The second tray 320 includes a second inner surface 322, and a second outer surface 324 opposite to the second inner surface 322.

The cavity 316 extends from the first inner surface 312 to the first outer surface 314 of the first tray 310. The cavity 316 may therefore form a through opening in the first tray 310. In some embodiments, the first tray 310 may further include the cavity protrusion 118 (shown in FIG. 2C) extending into the cavity 316.

Upon receipt of the orthodontic appliance 130A within the cavity 316, with the second tray 320 detached from the first tray 310, the orthodontic appliance 130A at least partially extends through the first outer surface 314 of the first tray 310. Furthermore, upon receipt of the orthodontic appliance 130A within the cavity 316 of the first tray 310 with the second tray 320 detached from the first tray 310, the base surface 132 of the orthodontic appliance 130A is disposed within the cavity 316 and spaced apart from the first inner surface 312 by the first gap G1 along the longitudinal axis 117. In some embodiments, at least 10% of a maximum length of the orthodontic appliance 130A is disposed above the first outer surface 314 of the first tray 310. In other words, at least 10% of the maximum length of the orthodontic appliance 130A extends outside the cavity 316. In some other embodiments, at least 15%, at least 20%, or at least 30% of the maximum length of the orthodontic appliance 130A is disposed above the first outer surface 314 of the first tray 310.

FIG. 4A illustrates the first tray 310 detachably coupled to the tooth 60A and the second tray 320 detached from the first tray 310. Referring to FIG. 4A, upon detachable coupling of the first tray 310 with the tooth 60A with the second tray 320 detached from the first tray 310, the orthodontic appliance 130A at least partially extends through the first outer surface 314 of the first tray 310. The orthodontic appliance 130A is at least partially and detachably received within the cavity 316 of the first tray 310, such that the adhesive layer 140 is spaced apart from the tooth surface 62A when the first tray 310 is detachably coupled to the tooth 60A.

In the illustrated embodiment of FIG. 4A, the first gap G1 remains unchanged upon detachable coupling of the first tray 310 to the tooth 60A with the second tray 320 detached from the first tray 310. Furthermore, the adhesive layer 140 disposed on the base surface 132 partially fills the first gap G1 prior to detachable coupling of the second tray 120 to the first tray 110, such that the adhesive layer 140 is spaced apart from the tooth surface 62A. In other words, the first gap G1 is greater than the thickness 140T of the adhesive layer 140.

FIG. 4B illustrates the first tray 310 detachably coupled to the tooth 60A with the second tray 320 detachably coupled to the first tray 310. Referring to FIG. 4B, upon detachable coupling of the second tray 320 with the first tray 310, the second tray 320 engages the first tray 310, and moves the orthodontic appliance 130A towards the tooth surface 62A along the longitudinal axis 117, such that the adhesive layer 140 contacts the tooth surface 62A. Furthermore, upon detachable coupling of the second tray 320 to the first tray 310, the second tray 320 engages the first tray 310 to move the orthodontic appliance 130A towards the first inner surface 312, such that the base surface 132 of the orthodontic appliance 130A is spaced apart from the first inner surface 312 by the second gap G2 along the longitudinal axis 117. The second gap G2 is less than the first gap G1. In some embodiments, the second gap G2 is less than or equal to the thickness 140T (shown in FIG. 4A) of the adhesive layer 140. In some other embodiments, the second gap G2 is substantially zero.

More specifically, upon detachable coupling of the second tray 320 with the first tray 310, the second inner surface 322 of the second tray 320 engages the orthodontic appliance 130A and moves the orthodontic appliance 130A towards the tooth surface 62A along the longitudinal axis 117, such that the adhesive layer 140 contacts the tooth surface 62A. In other words, upon detachable coupling of the second tray 320 with the first tray 310, the second inner surface 322 of the second tray 320 engages the orthodontic appliance 130A and moves the orthodontic appliance 130A towards the first inner surface 312 along the longitudinal axis 117, such that the adhesive layer 140 is at least flush with the first inner surface 312.

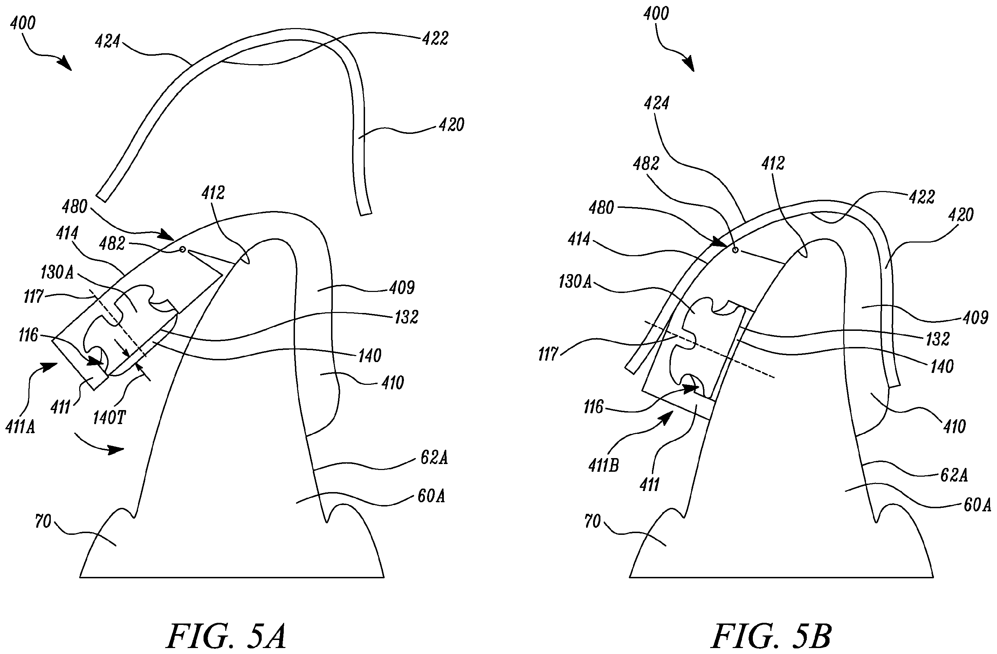

FIGS. 5A and 5B illustrate an indirect bonding device 400 according to yet another embodiment of the present disclosure , but which does not form part of the invention. The indirect bonding device 400 is similar to the indirect bonding device 100 illustrated in FIGS. 2A and 2B. Common components between the indirect bonding devices 100, 400 are illustrated by the same reference numerals. However, the indirect bonding device 400 includes a first tray 410 and a second tray 420 having different configurations from the first tray 110 and the second tray 120, respectively, illustrated in FIGS. 2A and 2B.

Referring to FIGS. 5A and 5B, the first tray 410 is configured to be detachably coupled to the tooth 60A having the tooth surface 62A. The first tray 410 includes a first inner surface 412, and a first outer surface 414 opposite to the first inner surface 412. The first tray 410 further includes a first portion 409 and a second portion 411. The first inner surface 412 at least partially conforms to the tooth surface 62A. Specifically, the first portion 409 at least partially conforms to the tooth surface 62A and is configured to be detachably coupled to the tooth 60A. In some embodiments, the first tray 410 may further include the occlusal stop members 190 (shown in FIG. 2A). Specifically, the first portion 409 of the first tray 410 may include the occlusal stop members 190. The second portion 411 includes the cavity 116 that at least partially and detachably receives the orthodontic appliance 130A therein.

The first tray 410 further includes a living hinge 480 connecting the first portion 409 to the second portion 411. In some embodiments, the first tray 410 may incorporate strategic cuts and thinned sections to form the living hinge 480. In the illustrated embodiment of FIGS. 5A and 5B, the living hinge 480 is formed by incorporating a cut partially extending from the first inner surface 412 to the first outer surface 414 of the first tray 410. In some embodiments, the living hinge 480 may be formed by a region having greater flexibility relative to the rest of the first tray 410. In some cases, the greater flexibility may be due to a material different from the rest of the first tray 410. In some cases, the greater flexibility may be due a region of weakness having structural features (e.g., partial cuts, perforations, reduced thickness, etc.) different from the rest of the first tray 410.

In some embodiments, the living hinge 480 defines a hinge axis 482. The hinge axis 482 may be defined as an axis about which the second portion 411 pivots with respect to the first portion 409. Specifically, the second portion 411 of the first tray 410 is configured to pivot about the hinge axis 482 with respect to the first portion 409. The second portion 411 is pivotable between a first position 411A (shown in FIG. 5A) and a second position 411B (shown in FIG. 5B). The second portion 411 is spaced apart from the tooth surface 62A in the first position 411A. Furthermore, the second portion 411 engages the tooth surface 62A in the second position 411B.

The second tray 420 includes a second inner surface 422, and a second outer surface 424 opposite to the second inner surface 422. The second tray 420 is configured to be detachably coupled to the first tray 410. Specifically, the second tray 420 is configured to engage the first tray 410 to pivotally move the second portion 411 about the hinge axis 482 towards the tooth surface 62A, such that the adhesive layer 140 contacts the tooth surface 62A. More specifically, the second tray 420 is configured to engage the first tray 410 to pivotally move the second portion 411 from the first position 411A to the second position 411B, such that the adhesive layer 140 contacts the tooth surface 62A.

FIG. 5A illustrates the first tray 410 detachably coupled to the tooth 60A and the second tray 420 detached from the first tray 410. Referring to FIG. 5A, upon detachable coupling of the first tray 410 to the tooth 60A with the second tray 420 detached from the first tray 410, the adhesive layer 140 is spaced apart from the tooth surface 62A. Specifically, upon detachable coupling of the first tray 410 to the tooth 60A with the second tray 420 detached from the first tray 410, the second portion 411 is at the first position 411A, such that the adhesive layer 140 is spaced apart from the tooth surface 62A. In some embodiments, the first tray 410 may be configured to retain the second portion 411 at the first position 411A upon detachable coupling of the first tray 410 to the tooth 60A, such that the adhesive layer 140 is spaced apart from the tooth surface 62A.

Referring to FIG. 5B, upon detachable coupling of the second tray 420 to the first tray 410, the second tray 420 engages the first tray 410 to move the orthodontic appliance 130A towards the tooth surface 62A, such that the adhesive layer 140 contacts the tooth surface 62A. Specifically, the second inner surface 412 of the second tray 420 engages the first tray 410 to move the orthodontic appliance 130A towards the tooth surface 62A. More specifically, upon detachable coupling of the second tray 420 to the first tray 410, the second portion 411 pivots about the hinge axis 482 to the second position 411B, such that the adhesive layer 140 contacts the tooth surface 62A.

In the illustrated embodiment of FIGS. 5A and 5B, the base surface 132 of the orthodontic appliance 130A is flush with the first inner surface 412 of the first tray 410 in the first position 411A of the second portion 411. This may enable the adhesive layer 140 to at least partially protrude from the cavity 116 in the first position 411A of the second portion 411. However, in some other embodiments, the base surface 132 of the orthodontic appliance 130A may not be flush with the first inner surface 412 of the first tray 410 in the first position 411A of the second portion 411. In such embodiments, the thickness 140T of the adhesive layer 140 may be greater than a distance between the first inner surface 412 and the base surface 132. Thus, in some embodiments, at least a portion of the adhesive layer 140 may extend through the first inner surface 412, and contact the tooth surface 62A at the second position 411B of the second portion 411.

The indirect bonding device 400 may reduce smearing of the adhesive layer 140 on the tooth 60A of the patient. Specifically, the adhesive layer 140 may be disposed on the base surface 132 of the orthodontic appliance 130A, such that the adhesive layer 140 may not smear on the tooth surface 62A upon detachable coupling of the first tray 110 to the tooth 60A. Thus, the indirect bonding device 400 may prevent the adhesive layer 140 from being wiped on the tooth surface 62A. Therefore, the indirect bonding device 400 may eliminate a need for dental practitioners to estimate and optimize the thickness 140T (shown in FIG. 1B) of the adhesive layer 140 for a reliable bonding of the orthodontic appliance 130A to the tooth 60A. Additionally, the indirect bonding device 400 may eliminate a need for removing excess adhesive (in a case where the dental practitioners use more adhesive than required). This may reduce a chair-time of the patient.

The indirect bonding device 400 may allow the orthodontic appliance 130A to approach the tooth 60A in a direction substantially perpendicular to the tooth surface 62A. Therefore, the indirect bonding device 400 may allow uniform spreading of the adhesive layer 140 on the application surface of the tooth 60A, and may reduce smearing of the adhesive layer 140 on the non-application surface of the tooth 60A. Furthermore, a contact of the occlusal aspect of the base surface 132 with the application surface of the tooth 60A before a contact of the gingival aspect of the base surface 132 with the application surface of the tooth 60A may direct the adhesive layer 140 toward a gingival area of the tooth surface 62A. In case of excessive adhesive, the excessive adhesive may be directed toward the gingival area of the tooth surface 62A. The excessive adhesive directed toward the gingival area of the tooth surface 62A may be easier to remove by the dental practitioner prior to adhesive curing.

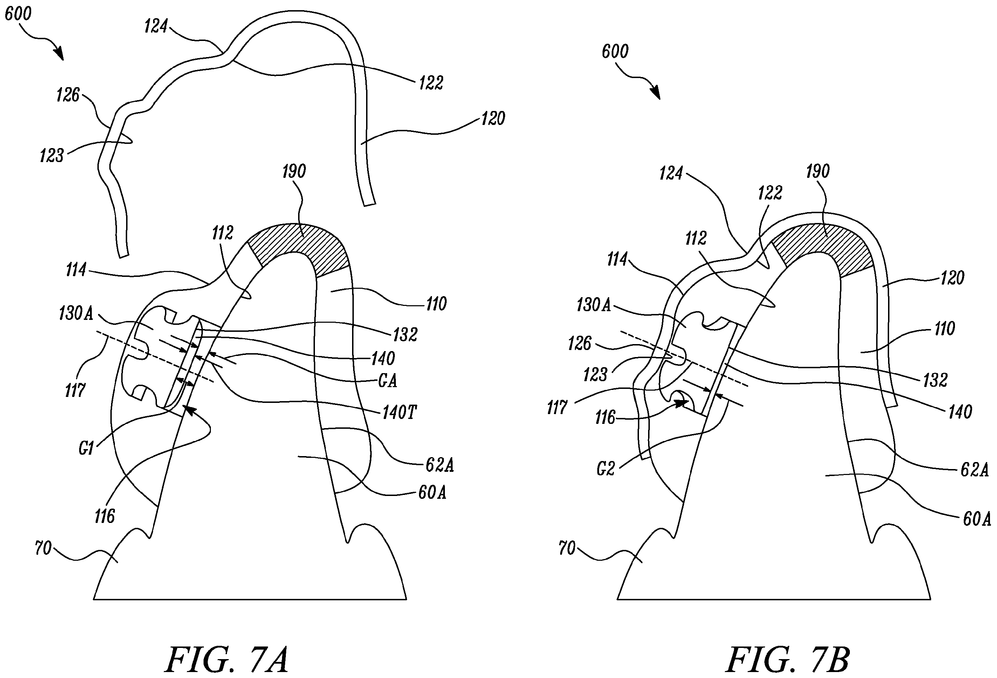

FIGS. 7A and 7B illustrate an indirect bonding device 600 according to another embodiment of the present invention. The indirect bonding device 600 is substantially similar to the indirect bonding device 100 illustrated in FIGS. 2A and 2B. Common components between the indirect bonding devices 100, 500 are illustrated by the same reference numerals. However, the indirect bonding device 500 includes a first tray 110 and a second tray 120 having different configurations from the first tray 110 and the second tray 120, respectively, illustrated in FIGS. 2A and 2B.

Referring to FIGS. 7A and 7B, the first tray 110 is configured to be detachably coupled to the tooth 60A having the tooth surface 62A. The first tray 110 includes a first inner surface 112, and a first outer surface 114 opposite to the first inner surface 112. The first inner surface 112 at least partially conforms to the tooth surface 62A. In some embodiments, the first tray 110 may further include the occlusal stop members 190 (shown in FIG. 2A).

Furthermore, the second tray 120 is configured to be detachably coupled to the first tray 110. The second tray 120 includes a second inner surface 122, and a second outer surface 124 opposite to the second inner surface 122. The second tray 110 further includes a deformable tray protrusion 126 disposed on the first outer surface 122 and extending away from the first inner surface 124 along the longitudinal axis 117. The deformable tray protrusion 126 (i.e., button) has a generally convex, lens-like shape, representing a deviation from the tooth shaped contour of the remainder of the second tray 120. In other embodiments, the protrusion 126 may be trapezoidal, pyramidal, or other bulbous shape sufficient to provide a deviation from the contour of the second tray 120. The thickness of the tray within the protrusion 126 may be thinner than the surrounding region of the second tray 120 to aid in the deformation. In the same or other embodiments, the protrusion 126 may include one or more thickness gradients, with a region nearer the center being thinner than regions near periphery or vice versa.

The peripheral dimensions of button 126 generally correspond to the profile size (i.e., mesial-distal width and occlusal gingival height) to the appliance 130A, such that a consistent pressure may be applied to the facial surface of the appliance 130A by the inner surface 123 of the second tray 120. In presently preferred implementations, the peripheral dimensions of the button are sufficiently larger than the profile dimensions to the appliance 130A, such that coupling the second tray 120 to the first tray 110 does not inadvertently cause the appliance 130A to move towards the tooth surface 62A. In other implementations, the peripheral dimensions may be commensurate or smaller than the profile dimensions of the appliance 130A.

FIG. 7A illustrates the first tray 110 detachably coupled to the tooth 60A and the second tray 120 detached from the first tray 210. Referring to FIG. 7A, upon detachable coupling of the first tray 110 to the tooth 60A with the second tray 120 detached from the first tray 110, the adhesive layer 140 is spaced apart from the tooth surface 62A.

In the illustrated embodiment of FIG. 7A, the first gap G1 remains unchanged upon detachable coupling of the first tray 110 to the tooth 60A with the second tray 120 detached from the first tray 210. Furthermore, the adhesive layer 140 disposed on the base surface 132 partially fills the first gap G1 prior to detachable coupling of the second tray 120 to the first tray 110, such that the adhesive layer 140 is spaced apart from the tooth surface 62A. In other words, the first gap G1 is greater than the thickness 140T of the adhesive layer 140.

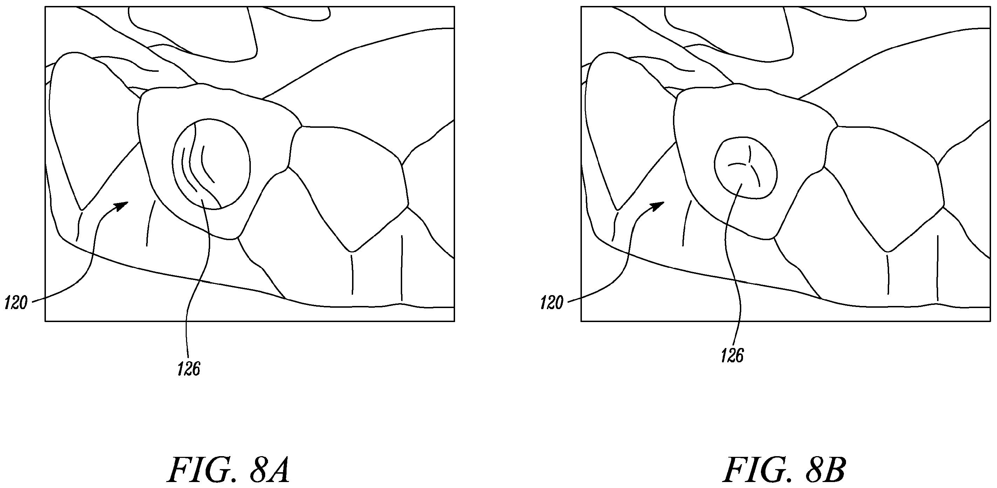

FIG. 8A illustrates the first tray 110 detachably coupled to the tooth 60A with the second tray 120 detachably coupled to the first tray 110 and the button 126 located in a generally facial direction from the appliance 130A. FIGS. 7B & 8B illustrate the deformation of the button 126 in directions towards the appliance 130A. Referring to FIG. 8A, upon detachable coupling of the second tray 120 to the first tray 110, the second tray 120 engages the first tray 210, but the orthodontic appliance is not moved the towards the tooth surface 62A until the button 126 is itself pressed in the direction of the tooth surface 62A. Instead, a inner surface 123 is held adjacent the outer surface 114 and appliance 130A, with some embodiments resulting in a gap between the two surfaces 123, 114. Referring to FIGS. 7B and 8B, once the button 126 is deformed by the patient or practitioner to move the orthodontic appliance 130A towards the first inner surface 212, the base surface 132 of the orthodontic appliance 130A is spaced apart from the first inner surface 212 by the second gap G2 along the longitudinal axis 117. The second gap G2 is less than the first gap G1. In some embodiments, the second gap G2 is less than or equal to the thickness 140T (shown in FIG. 3A) of the adhesive layer 140. In some other embodiments, the second gap G2 is substantially zero. In some embodiments, the second gap G2 may be negative.

More specifically, in the illustrated embodiment of FIGS.7A-7B and 8A-8B, upon at least partial deformation of the button 126 in the direction of the first tray 110, the second inner surface 123 of the second tray 120 engages the outer surface 114 of the first tray and at least partially deforms the outer surface 114 to move the orthodontic appliance 130A towards the tooth surface 62A along the longitudinal axis 117, such that the adhesive layer 140 contacts the tooth surface 62A. Furthermore, the second inner surface 123 of the second tray 120 engages the outer surface 114 and at least partially deforms the first tray 110 to move the orthodontic appliance 130A towards the first inner surface 212 along the longitudinal axis 117, such that the adhesive layer 140 is at least flush with the first inner surface 112. The deformation may be affected by the fingertip of a patient or practitioner, or through an orthodontic tool having a surface sufficient to the depress the button 126. The embodiment allows for additional control over when the act of bonding occurs, which may include sequential bonding or confirmation of intended bonding location.

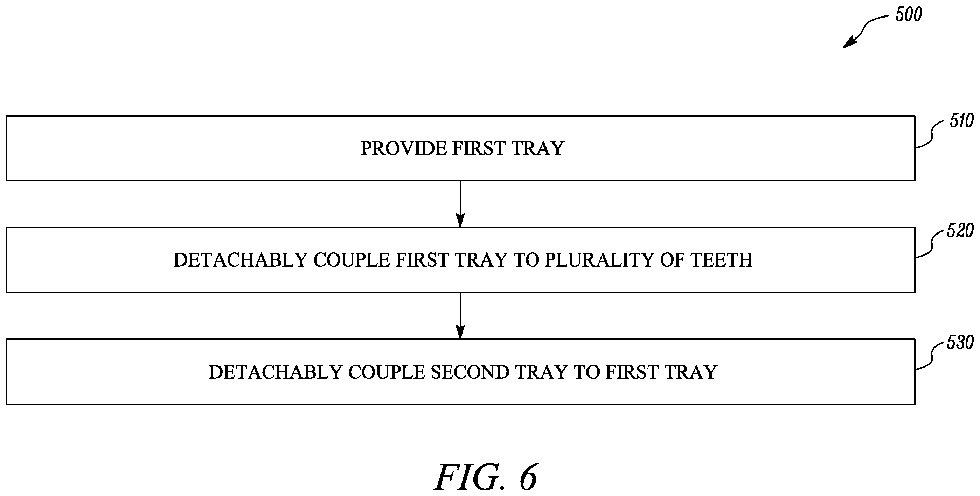

FIG. 6 illustrates a method 500 for the plurality of teeth 60, wherein the method is not forming part of the invention. Each tooth 60 from the plurality of teeth 60 includes the tooth surface 62. In some embodiments, the method 500 may be used to apply the plurality of orthodontic appliances 130 to the plurality of teeth 60 using any one of the indirect bonding devices 100, 200, 300, 400. In some other embodiments, the method 500 may be used to apply the orthodontic appliance 130A to the tooth 60A using any one of the indirect bonding devices 100, 200, 300, 400. The method 500 will be described with reference to FIGS. 1A-5B and 6. The method 500 includes the following steps:
At step 510, the method 500 includes providing the first tray 110, 210, 310, 410 including the plurality of cavities 116, 316 and the plurality of orthodontic appliances 130. As discussed above, each orthodontic appliance 130 from the plurality of orthodontic appliances 130 is at least partially and detachably received within the corresponding cavity 116, 316 from the plurality of cavities 116, 316. In some embodiments, the first tray 110, 210, 310, 410 further includes a plurality of cavity protrusions 118 corresponding to the plurality of cavities 116, 316. In some embodiments, each cavity protrusion 118 extends into the corresponding cavity 116. 316. In some embodiments, each orthodontic appliance 130 is engaged by a corresponding cavity protrusion 118 from the plurality of cavity protrusions 118 to retain the corresponding orthodontic appliance 130 within the corresponding cavity 116, 316. The adhesive layer 140 is provided on the base surface 132 of each orthodontic appliance 130.

Also discussed above, the first tray 110, 210, 310, 410 includes the first inner surface 112, 212, 312, 412. In some embodiments, the first inner surface 112, 212, 312, 412 at least partially conforms to the tooth surface 62 of each tooth 60. The first tray 110, 210, 310, 410 further includes the first outer surface 114, 214, 314, 414 opposite to the first inner surface 112, 212, 312, 412. In some embodiments, each cavity 116, 316 from the plurality of cavities 116, 316 at least partially extends from the first inner surface 112, 212, 312, 412 towards the first outer surface 114, 214, 314, 414 along the longitudinal axis 117.

At step 520, the method 500 further includes detachably coupling the first tray 110, 210, 310, 410 to the plurality of teeth 60, such that the adhesive layer 140 provided on the base surface 132 of the corresponding orthodontic appliance 130 from the plurality of orthodontic appliances 130 is spaced apart from the tooth surface 62 of the corresponding tooth 60 from the plurality of teeth 60.

In some embodiments, the base surface 132 of each orthodontic appliance 130 and the first inner surface 112, 212, 312 of the first tray 110, 210, 310 define the first gap G1 therebetween along the longitudinal axis 117. The thickness 140T of the adhesive layer 140 is less than the first gap G1, such that the adhesive layer 140 is spaced apart from the tooth surface 62 of the corresponding tooth 60 upon detachable coupling of the first tray 110, 210, 310 to the plurality of teeth 60 with the second tray 120, 220, 320 detached from the first tray 110, 210. 310.

At step 530, the method 500 further includes detachably coupling the second tray 120, 220, 320, 420 to the first tray 110, 210, 310, 410 to move each orthodontic appliance 130 towards the tooth surface 62 of the corresponding tooth 60, such that the adhesive layer 140 provided on the base surface 132 of the corresponding orthodontic appliance 130 contacts the tooth surface 62 of the corresponding tooth 60. In some embodiments, as described above relative to indirect bonding device 600, the coupling of the second tray 120 does not alone move each orthodontic appliance 130 toward the tooth surface 63; instead, a patient or practitioner must deform a button 126 on the second tray to cause the intended movement of the appliance 130.

In some embodiments, detachably coupling the second tray 120, 220, 320, 420 to the first tray 110, 210, 310, 410 further includes detachably coupling the second tray 120, 220, 320, 420 to the first tray 110, 210, 310, 410 via an interference fit.

In some embodiments, detachably coupling the second tray 120, 220, 320, 420 to the first tray 110, 210, 310, 410 further includes engaging the second inner surface 122, 222, 322, 422 of the second tray 120, 220, 320, 420 with at least one of the first tray 110, 210, 310, 410 and each orthodontic appliance 130 to move each orthodontic appliance 130 towards the tooth surface 62 of the corresponding tooth 60, such that the adhesive layer 140 contacts the tooth surface 62.

In some embodiments, as shown in FIG. 2A and 2B, detachably coupling the second tray 120 to the first tray 110 further includes engaging the projection 123 disposed on the second inner surface 122 of the second tray 120 with the first outer surface 114 of the first tray 110 to at least partially deform the first tray 110, such that the orthodontic appliance 130A corresponding to the projection 123 moves towards the tooth surface 62A of the corresponding tooth 60A.

In some embodiments, as shown in FIGS. 3A and 3B, detachably coupling the second tray 220 to the first tray 210 further includes engaging the second inner surface 222 of the second tray 220 with the tray protrusion 215 disposed on the first outer surface 214 of the first tray 210 to at least partially deform the tray protrusion 215, such that the orthodontic appliance 130A corresponding to the tray protrusion 215 moves towards the tooth surface 62A of the corresponding tooth 60A.

In some embodiments, as shown in FIGS. 4A and 4B, each cavity 316 extends from the first inner surface 312 to the first outer surface 314 of the first tray 310, such that each orthodontic appliance 130A at least partially extends through the first outer surface 314 of the first tray 310 upon receipt of the orthodontic appliance 130A within the corresponding cavity 316 with the second tray 320 detached from the first tray 310. Furthermore, detachably coupling the second tray 320 to the first tray 310 further includes engaging the second inner surface 322 of the second tray 320 with each orthodontic appliance 130A to move each orthodontic appliance 130A towards the tooth surface 62A of the corresponding tooth 60A.

In some embodiments, as shown in FIGS. 5A and 5B, the first tray 410 further includes the first portion 409 at least partially conforming to the tooth surface 62 of each of the plurality of teeth 60 and configured to be detachably coupled to each of the plurality of teeth 60. The first tray 410 further includes the second portion 411 including the plurality of cavities 116 that at least partially and detachably receives the corresponding orthodontic appliance 130 therein. The first tray 410 further includes the living hinge 480 connecting the first portion 409 to the second portion 411. The living hinge 480 defines the hinge axis 482. Detachably coupling the first tray 410 to the plurality of teeth 60 further includes positioning the second portion 411 about the hinge axis 482, such that the second portion 411 is spaced apart from the tooth surface 62 of each of the plurality of teeth 60 upon detachable coupling of the first tray 410 to the plurality of teeth 60 with the second tray 420 detached from the first tray 410.

In some embodiments, detachably coupling the second tray 420 to the first tray 410 further includes engaging the second tray 420 with the first tray 410 to pivotally move the second portion 411 about the hinge axis 482 towards the tooth surface 62 of each of the plurality of teeth 60, such that the adhesive layer 140 contacts the tooth surface 62 of the corresponding tooth 60.

In some embodiments, the method 500 further includes hardening (i.e., curing or at least partial solidification of) the adhesive layer 140 for a predetermined time period. In some embodiments, the predetermined time period may be at least about 5 seconds, at least about 10 seconds, at least about 20 seconds, at least about 30 seconds, at least about 40 seconds, at least about 50 seconds, or at least about 60 seconds.

In some embodiments, the method 500 further includes detaching the second tray 120, 220, 320, 420 from the first tray 110, 210, 310, 410. In some embodiments, the method 500 further includes detaching the first tray 110, 210, 310, 410 from the plurality of teeth 60.

It will be appreciated that the arrangements presented herein may be varied in any number of aspects while still remaining within the scope of the disclosures herein.

Unless otherwise indicated, all numbers expressing feature sizes, amounts, and physical properties used in the specification and claims are to be understood as being modified by the term "about". Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims.

## Claims

1. An indirect bonding device comprising:
a first tray (110) configured to be detachably coupled to a tooth having a tooth surface, the first tray comprising:
a first inner surface (112) at least partially conforming to the tooth surface;
a first outer surface (114) opposite to the first inner surface; and
a cavity (116) at least partially extending from the first inner surface to the first outer surface along a longitudinal axis;
an orthodontic appliance (130) at least partially and detachably received within the cavity, the orthodontic appliance comprising:
a base surface (132); and
an adhesive layer (140) disposed on the base surface, wherein the adhesive layer is configured to bond the orthodontic appliance to the tooth;
wherein a minimum gap (GA) is provided between the adhesive layer (140) and the first inner surface (112) of the first tray (110); and
a second tray (120) configured to be detachably coupled to the first tray (110);
wherein:
upon detachable coupling of the first tray (110) to the tooth with the second tray (120) detached from the first tray (110), the minimum gap (GA) provided between the adhesive layer (140) and the first inner surface (112) of the first tray (110) remains unchanged; and
upon detachable coupling of the second tray (120) to the first tray (110), the second tray (120) engages the first tray (110) to move the orthodontic appliance (130) towards the tooth surface, such that the adhesive layer (140) is at least flush with the first inner surface (112) of the first tray (110);
wherein the first tray (110) comprises a first material having a first elastic modulus, wherein the second tray (120) comprises a second material having a second elastic modulus, and wherein the second elastic modulus is greater than the first elastic modulus, wherein the second tray is configured to at least partially deform the first tray upon engagement with the first tray.

2. The indirect bonding device of claim 1, wherein the first tray further comprises a cavity protrusion extending into the cavity, and wherein the cavity protrusion engages the orthodontic appliance, such that the orthodontic appliance is retained within the cavity.

3. The indirect bonding device of claim 1, wherein:
upon receipt of the orthodontic appliance (130) within the cavity (116) of the first tray (110) with the second tray (120) detached from the first tray (110), the base surface (132) of the orthodontic appliance (130) and the first inner surface (112) of the first tray (110) define a first gap (G1) therebetween along the longitudinal axis; and
the adhesive layer (140) disposed on the base surface (132) partially fills the first gap (G1), such that the minimum gap (GA) provided between the adhesive layer (140) and the first inner surface (112) of the first tray (110) remains unchanged upon detachable coupling of the first tray (110) to the tooth with the second tray (120) detached from the first tray (110).

4. The indirect bonding device of claim 1, wherein:
the first tray further comprises a tray protrusion disposed on the first outer surface and extending away from the first inner surface of the first tray along the longitudinal axis;
the second tray comprises a second inner surface; and
upon detachable coupling of the second tray to the first tray, the second inner surface of the second tray engages the tray protrusion and at least partially deforms the tray protrusion to move the orthodontic appliance towards the tooth surface along the longitudinal axis, such that the adhesive layer contacts the tooth surface.

5. The indirect bonding device of claim 1, wherein:
the second tray comprises a second inner surface and a projection disposed on the second inner surface, the projection extending towards the first outer surface of the first tray; and
upon detachable coupling of the second tray to the first tray, the projection at least partially deforms the first tray to move the orthodontic appliance towards the tooth surface along the longitudinal axis, such that the adhesive layer contacts the tooth surface.

6. The indirect bonding device of claim 1, wherein:
the cavity extends from the first inner surface to the first outer surface of the first tray;
the second tray comprises a second inner surface;
upon receipt of the orthodontic appliance within the cavity with the second tray detached from the first tray, the orthodontic appliance at least partially extends through the first outer surface of the first tray; and
upon detachable coupling of the second tray with the first tray, the second inner surface of the second tray engages the orthodontic appliance and moves the orthodontic appliance towards the tooth surface along the longitudinal axis, such that the adhesive layer contacts the tooth surface.

7. The indirect bonding device of claim 1, wherein the first tray further comprises:
a first portion at least partially conforming to the tooth surface and configured to be detachably coupled to the tooth;
a second portion comprising the cavity that at least partially and detachably receives the orthodontic appliance therein; and
a living hinge connecting the first portion to the second portion, the living hinge defining a hinge axis;
wherein:
the second portion of the first tray is configured to pivot about the hinge axis with respect to the first portion; and
the second tray is configured to engage the first tray to pivotally move the second portion about the hinge axis towards the tooth surface, such that the adhesive layer contacts the tooth surface.

8. The indirect bonding device of claim 7, wherein:
the second portion is pivotable between a first position and a second position, the second portion being spaced apart from the tooth surface in the first position, and the second portion engaging the tooth surface in the second position;
upon detachable coupling of the first tray to the tooth with the second tray detached from the first tray, the second portion is at the first position, such that the adhesive layer is spaced apart from the tooth surface; and
upon detachable coupling of the second tray to the first tray, the second portion pivots about the hinge axis to the second position, such that the adhesive layer contacts the tooth surface.

9. The indirect bonding device of claim 1, further comprising a plurality of the orthodontic appliances corresponding to the plurality of teeth, wherein the first tray comprises a plurality of the cavities corresponding to a plurality of teeth, and wherein each orthodontic appliance is at least partially and detachably received within a corresponding cavity from the plurality of the cavities.

## Patentansprüche

1. Eine Einrichtung zum indirekten Kleben, aufweisend:
eine erste Schiene (110), die konfiguriert ist, um lösbar mit einem Zahn, der eine Zahnoberfläche hat, verbunden zu werden, die erste Schiene aufweisend:
eine erste Innenoberfläche (112), die mindestens teilweise mit der Zahnoberfläche übereinstimmt;
eine erste Außenoberfläche (114) gegenüber der ersten Innenoberfläche; und
einen Hohlraum (116), der sich mindestens teilweise von der ersten Innenoberfläche zu der ersten Außenoberfläche entlang einer Längsachse erstreckt;
eine kieferorthopädische Vorrichtung (130), die mindestens teilweise und lösbar innerhalb des Hohlraums aufgenommen ist, die kieferorthopädische Vorrichtung aufweisend:
eine Basisoberfläche (132); und
eine Haftschicht (140), die auf der Basisoberfläche angeordnet ist, wobei die Haftschicht konfiguriert ist, um die kieferorthopädische Vorrichtung an den Zahn zu kleben;
wobei ein Mindestspalt (GA) zwischen der Haftschicht (140) und der ersten Innenoberfläche (112) der ersten Schiene (110) bereitgestellt ist; und
eine zweite Schiene (120), die konfiguriert ist, um lösbar mit der ersten Schiene (110) verbunden zu werden;
wobei:
bei einem lösbaren Verbinden der ersten Schiene (110) mit dem Zahn, wobei die zweite Schiene (120) von der ersten Schiene (110) gelöst ist, der Mindestspalt (GA), der zwischen der Haftschicht (140) und der ersten inneren Oberfläche (112) der ersten Schiene (110) bereitgestellt ist, unverändert bleibt; und
bei dem lösbaren Verbinden der zweiten Schiene (120) mit der ersten Schiene (110) die zweite Schiene (120) mit der ersten Schiene (110) in Eingriff tritt, um die kieferorthopädische Vorrichtung (130) in Richtung der Zahnoberfläche zu bewegen, sodass die Haftschicht (140) mindestens bündig mit der ersten Innenoberfläche (112) der ersten Schiene (110) ist;
wobei die erste Schiene (110) ein erstes Material, das einen ersten Elastizitätsmodul hat, aufweist, wobei die zweite Schiene (120) ein zweites Material, das einen zweiten Elastizitätsmodul hat, aufweist und wobei der zweite Elastizitätsmodul größer als der erste Elastizitätsmodul ist, wobei die zweite Schiene konfiguriert ist, um die erste Schiene bei Eingriff mit der ersten Schiene mindestens teilweise zu verformen.

2. Die Einrichtung zum indirekten Kleben nach Anspruch 1, wobei die erste Schiene ferner einen Hohlraumvorsprung, der sich in den Hohlraum hinein erstreckt, aufweist und wobei der Hohlraumvorsprung mit der kieferorthopädischen Vorrichtung in Eingriff tritt, sodass die kieferorthopädische Vorrichtung innerhalb des Hohlraums gehalten wird.

3. Die Einrichtung zum indirekten Kleben nach Anspruch 1, wobei:
bei einer Aufnahme der kieferorthopädischen Vorrichtung (130) innerhalb des Hohlraums (116) der ersten Schiene (110), wobei die zweite Schiene (120) von der ersten Schiene (110) gelöst ist, die Basisoberfläche (132) der kieferorthopädischen Vorrichtung (130) und die erste Innenoberfläche (112) der ersten Schiene (110) einen ersten Spalt (G1) dazwischen entlang der Längsachse definieren; und
die Haftschicht (140), die auf der Basisoberfläche (132) angeordnet ist, den ersten Spalt (G1) teilweise ausfüllt, sodass der Mindestspalt (GA), der zwischen der Haftschicht (140) und der ersten Innenoberfläche (112) der ersten Schiene (110) bereitgestellt ist, bei dem lösbaren Verbinden der ersten Schiene (110) mit dem Zahn, wobei die zweite Schiene (120) von der ersten Schiene (110) gelöst ist, unverändert bleibt.

4. Die Einrichtung zum indirekten Kleben nach Anspruch 1, wobei:
die erste Schiene ferner einen Schienenvorsprung, der auf der ersten Außenoberfläche angeordnet ist und sich von der ersten Innenoberfläche der ersten Schiene entlang der Längsachse weg erstreckt, aufweist;
die zweite Schiene eine zweite Innenoberfläche aufweist; und
bei dem lösbaren Verbinden der zweiten Schiene mit der ersten Schiene die zweite Innenoberfläche der zweiten Schiene mit dem Schienenvorsprung in Eingriff tritt und den Schienenvorsprung mindestens teilweise verformt, um die kieferorthopädische Vorrichtung entlang der Längsachse in Richtung der Zahnoberfläche zu bewegen, sodass die Haftschicht die Zahnoberfläche kontaktiert.

5. Die Einrichtung zum indirekten Kleben nach Anspruch 1, wobei:
die zweite Schiene eine zweite Innenoberfläche und einen Vorsprung, der auf der zweiten Innenoberfläche angeordnet ist, aufweist, wobei sich der Vorsprung in Richtung der ersten Außenoberfläche der ersten Schiene erstreckt; und
bei dem lösbaren Verbinden der zweiten Schiene mit der ersten Schiene der Vorsprung die erste Schiene mindestens teilweise verformt, um die kieferorthopädische Vorrichtung entlang der Längsachse in Richtung der Zahnoberfläche zu bewegen, sodass die Haftschicht die Zahnoberfläche kontaktiert.

6. Die Einrichtung zum indirekten Kleben nach Anspruch 1, wobei:
sich der Hohlraum von der ersten Innenoberfläche zu der ersten Außenoberfläche der ersten Schiene erstreckt;
die zweite Schiene eine zweite Innenoberfläche aufweist;
bei der Aufnahme der kieferorthopädischen Vorrichtung innerhalb des Hohlraums, wobei die zweite Schiene von der ersten Schiene gelöst ist, sich die kieferorthopädische Vorrichtung mindestens teilweise durch die erste Außenoberfläche der ersten Schiene erstreckt; und
bei dem lösbaren Verbinden der zweiten Schiene mit der ersten Schiene die zweite Innenoberfläche der zweiten Schiene mit der kieferorthopädischen Vorrichtung in Eingriff tritt und die kieferorthopädische Vorrichtung entlang der Längsachse in Richtung der Zahnoberfläche bewegt, sodass die Haftschicht die Zahnoberfläche kontaktiert.

7. Die Einrichtung zum indirekten Kleben nach Anspruch 1, wobei die erste Schiene ferner aufweist:
einen ersten Abschnitt, der mindestens teilweise mit der Zahnoberfläche übereinstimmt und konfiguriert ist, um lösbar mit dem Zahn verbunden zu sein;
einen zweiten Abschnitt, aufweisend den Hohlraum, der die kieferorthopädische Vorrichtung mindestens teilweise und lösbar darin aufnimmt; und
ein Filmscharnier, das den ersten Abschnitt mit dem zweiten Abschnitt verbindet, wobei das Filmscharnier eine Scharnierachse definiert;
wobei:
der zweite Abschnitt der ersten Schiene konfiguriert ist, um sich um die Scharnierachse in Bezug auf den ersten Abschnitt zu drehen; und
die zweite Schiene konfiguriert ist, um mit der ersten Schiene in Eingriff zu treten, um den zweiten Abschnitt um die Scharnierachse herum in Richtung der Zahnoberfläche drehbar zu bewegen, sodass die Haftschicht die Zahnoberfläche kontaktiert.

8. Die Einrichtung zum indirekten Kleben nach Anspruch 7, wobei:
der zweite Abschnitt zwischen einer ersten Position und einer zweiten Position drehbar ist, wobei der zweite Abschnitt in der ersten Position von der Zahnoberfläche beabstandet ist und der zweite Abschnitt in der zweiten Position mit der Zahnoberfläche in Eingriff tritt;
bei dem lösbaren Verbinden der ersten Schiene mit dem Zahn, wobei die zweite Schiene von der ersten Schiene gelöst ist, sich der zweite Abschnitt an der ersten Position befindet, sodass die Haftschicht von der Zahnoberfläche beabstandet ist; und
bei dem lösbaren Verbinden der zweiten Schiene mit der ersten Schiene sich der zweite Abschnitt um die Scharnierachse herum in die zweite Position dreht, sodass die Haftschicht die Zahnoberfläche kontaktiert.

9. Die Einrichtung zum indirekten Kleben nach Anspruch 1, ferner aufweisend eine Mehrzahl der kieferorthopädischen Vorrichtungen, die der Mehrzahl von Zähnen entspricht, wobei die erste Schiene eine Mehrzahl der Hohlräume, die einer Mehrzahl von Zähnen entspricht, aufweist und wobei jede kieferorthopädische Vorrichtung mindestens teilweise und lösbar innerhalb eines entsprechenden Hohlraums aus der Mehrzahl der Hohlräume aufgenommen ist.

## Revendications

1. Dispositif de liaison indirecte comprenant :
une première gouttière (110) conçue pour être accouplée de façon détachable à une dent ayant une surface dentaire, la première gouttière comprenant :
une première surface interne (112) épousant au moins partiellement la surface dentaire ;
une première surface externe (114) opposée à la première surface interne ; et
une cavité (116) s'étendant au moins partiellement de la première surface interne à la première surface externe le long d'un axe longitudinal ;
un appareil orthodontique (130) reçu au moins partiellement et de façon détachable au sein de la cavité, l'appareil orthodontique comprenant :
une surface de base (132) ; et
une couche adhésive (140) disposée sur la surface de base, dans lequel la couche adhésive est conçue pour lier l'appareil orthodontique à la dent ;
dans lequel un espace minimal (GA) est fourni entre la couche adhésive (140) et la première surface interne (112) de la première gouttière (110) ; et
une seconde gouttière (120) conçue pour être accouplée de façon détachable à la première gouttière (110) ;
dans lequel :
lors d'un accouplement détachable de la première gouttière (110) à la dent avec la seconde gouttière (120) détachée de la première gouttière (110), l'espace minimal (GA) fourni entre la couche adhésive (140) et la première surface interne (112) de la première gouttière (110) demeure inchangé ; et
lors d'un accouplement détachable de la seconde gouttière (120) à la première gouttière (110), la seconde gouttière (120) vient en prise avec la première gouttière (110) pour déplacer l'appareil orthodontique (130) en direction de la surface dentaire, de telle sorte que la couche adhésive (140) est au moins affleurante à la première surface interne (112) de la première gouttière (110) ;
dans lequel la première gouttière (110) comprend un premier matériau ayant un premier module élastique, dans lequel la seconde gouttière (120) comprend un second matériau ayant un second module élastique, et dans lequel le second module élastique est plus grand que le premier module élastique, dans lequel la seconde gouttière est conçue pour déformer au moins partiellement la première gouttière lors d'une mise en prise avec la première gouttière.

2. Dispositif de liaison indirecte selon la revendication 1, dans lequel la première gouttière comprend en outre une partie saillante de cavité s'étendant dans la cavité, et dans lequel la partie saillante de cavité vient en prise avec l'appareil orthodontique, de telle sorte que l'appareil orthodontique est retenu au sein de la cavité.

3. Dispositif de liaison indirecte selon la revendication 1, dans lequel :
à la réception de l'appareil orthodontique (130) au sein de la cavité (116) de la première gouttière (110) avec la seconde gouttière (120) détachée de la première gouttière (110), la surface de base (132) de l'appareil orthodontique (130) et la première surface interne (112) de la première gouttière (110) définissent un premier espace (G1) entre elles le long de l'axe longitudinal ; et
la couche adhésive (140) disposée sur la surface de base (132) remplit partiellement le premier espace (G1), de telle sorte que l'espace minimal (GA) fourni entre la couche adhésive (140) et la première surface interne (112) de la première gouttière (110) demeure inchangé lors d'un accouplement détachable de la première gouttière (110) à la dent avec la seconde gouttière (120) détachée de la première gouttière (110).

4. Dispositif de liaison indirecte selon la revendication 1, dans lequel :
la première gouttière comprend en outre une partie saillante de gouttière disposée sur la première surface externe et s'étendant à l'écart de la première surface interne de la première gouttière le long de l'axe longitudinal ;
la seconde gouttière comprend une seconde surface interne ; et
lors d'un accouplement détachable de la seconde gouttière à la première gouttière, la seconde surface interne de la seconde gouttière vient en prise avec la partie saillante de gouttière et déforme au moins partiellement la partie saillante de gouttière pour déplacer l'appareil orthodontique en direction de la surface dentaire le long de l'axe longitudinal, de telle sorte que la couche adhésive vient en contact avec la surface dentaire.

5. Dispositif de liaison indirecte selon la revendication 1, dans lequel :
la seconde gouttière comprend une seconde surface interne et une saillie disposée sur la seconde surface interne, la saillie s'étendant en direction de la première surface externe de la première gouttière ; et
lors d'un accouplement détachable de la seconde gouttière à la première gouttière, la saillie déforme au moins partiellement la première gouttière pour déplacer l'appareil orthodontique en direction de la surface dentaire le long de l'axe longitudinal, de telle sorte que la couche adhésive vient en contact avec la surface dentaire.

6. Dispositif de liaison indirecte selon la revendication 1, dans lequel :
la cavité s'étend de la première surface interne à la première surface externe de la première gouttière ;
la seconde gouttière comprend une seconde surface interne ;
à la réception de l'appareil orthodontique au sein de la cavité avec la seconde gouttière détachée de la première gouttière, l'appareil orthodontique s'étend au moins partiellement à travers la première surface externe de la première gouttière ; et
lors d'un accouplement détachable de la seconde gouttière à la première gouttière, la seconde surface interne de la seconde gouttière vient en prise avec l'appareil orthodontique et déplace l'appareil orthodontique en direction de la surface dentaire le long de l'axe longitudinal, de telle sorte que la couche adhésive vient en contact avec la surface dentaire.

7. Dispositif de liaison indirecte selon la revendication 1, dans lequel la première gouttière comprend en outre :
une première partie épousant au moins partiellement la surface dentaire et conçue pour être accouplée de façon détachable à la dent ;
une seconde partie comprenant la cavité qui reçoit au moins partiellement et de façon détachable l'appareil orthodontique à l'intérieur de celle-ci ; et
une charnière active reliant la première partie à la seconde partie, la charnière active définissant un axe de charnière ;
dans lequel :
la seconde partie de la première gouttière est conçue pour pivoter autour de l'axe de charnière par rapport à la première partie ; et
la seconde gouttière est conçue pour venir en prise avec la première gouttière pour déplacer de façon pivotante la seconde partie autour de l'axe de charnière en direction de la surface dentaire, de telle sorte que la couche adhésive vient en contact avec la surface dentaire.

8. Dispositif de liaison indirecte selon la revendication 7, dans lequel :
la seconde partie peut pivoter entre une première position et une seconde position, la seconde partie étant espacée de la surface dentaire dans la première position, et la seconde partie venant en prise avec la surface dentaire dans la seconde position ;
lors d'un accouplement détachable de la première gouttière à la dent avec la seconde gouttière détachée de la première gouttière, la seconde partie est à la première position, de telle sorte que la couche adhésive est espacée de la surface dentaire ; et
lors d'un accouplement détachable de la seconde gouttière à la première gouttière, la seconde partie pivote autour de l'axe de charnière vers la seconde position, de telle sorte que la couche adhésive vient en contact avec la surface dentaire.

9. Dispositif de liaison indirecte selon la revendication 1, comprenant en outre une pluralité des appareils orthodontiques correspondant à la pluralité de dents, dans lequel la première gouttière comprend une pluralité des cavités correspondant à une pluralité de dents, et dans lequel chaque appareil orthodontique est reçu au moins partiellement et de façon détachable au sein d'une cavité correspondante parmi la pluralité des cavités.
